# EUROPEAN PATENT APPLICATION

(11) **EP 4 749 157 A1**
(43) Date of publication of application: **27.05.2026**
(21) Application number: 24844732.8
(22) Date of filing: 19.07.2024
(51) Int. Cl.: F16F 9/34, B60G 17/052

(54) **HYDRO-PNEUMATIC SPRING DEVICE CAPABLE OF REGULATING DAMPING FORCE**

(30) Priority: 21.07.2023 CN 202310905333
(71) Applicant: Ningbo Dingqu Automotive Technology Co., Ltd., Ninghai County Ningbo, Zhejiang 315000 (CN)
(72) Inventor: LOU, Yongchan, Ningbo, Zhejiang 315000 (CN)
(74) Representative: Meyer-Dulheuer MD Legal Patentanwälte PartG mbB
(86) International application number: PCT/CN2024/106505
(87) International publication number: WO 2025/021041

(57) **Abstract**

A hydro-pneumatic spring device capable of regulating a damping force is provided. The hydro-pneumatic spring device includes a liquid reservoir (3), a hydraulic cylinder (2), and a damper (1). The hydraulic cylinder includes a cylinder barrel component (200) and a connecting rod and piston component (201). The damper includes a first damping valve (11), a second damping valve (12), and a valve body (13), both the first damping valve and the second damping valve are mounted on the valve body and are arranged independently of each other. A rodless cavity (211) can be respectively in communication with the liquid reservoir and a rod cavity (212) by means of the first damping valve and the second damping valve. Alternatively, the rodless cavity can be respectively in communication with the rod cavity and the liquid reservoir by means of the first damping valve and the second damping valve. Thus, the magnitude of motion damping forces during stretching and compression motions of the hydraulic cylinder can be regulated and controlled, and the diversion and combination of hydraulic fluid are achieved.

## Description

This application claims priority to Chinese patent application No. 202310905333.8, filed on July 21, 2023, the content of which is hereby incorporated by reference in its entirety.

### TECHNICAL FIELD

The present invention relates to the field of hydro-pneumatic spring technology, and in particular, to a hydro-pneumatic spring device capable of regulating a damping force.

### BACKGROUND

A suspension system is a connection device between a frame of a vehicle and an axle or a wheel, and has a function of constraining a motion track between the wheel and the frame, transmitting a force and a torque acting between the wheel and the frame, buffering an impact force transmitted to the frame or a vehicle body by an uneven road surface, and attenuating vibration caused thereby, so as to ensure the vehicle to drive smoothly.

A hydro-pneumatic spring device is an important component in a vehicle suspension system, usually the hydro-pneumatic spring merely has a function of pushing up the vehicle body and does not have a function of adjusting a damping force, while a related vehicle damping device (a shock absorber) usually merely has a function of adjusting the damping force, vibration generated during a driving process of the vehicle may drive a connecting rod and piston component of a hydraulic cylinder of the damping device to perform telescopic movement in a cylinder barrel component. Correspondingly, hydraulic fluid in the hydraulic cylinder will flow through a damping valve of the damping device and exchange with a liquid reservoir, during above process, the hydraulic fluid may generate circulation pressure drop when flowing through the damping valve, so that the hydraulic cylinder generates a motion damping force when performing the telescopic movement, and an application of the damping device in the vehicle suspension system inhibits vibration generated during the driving process of the vehicle.

In order to output a large expansion force (spring force) under an appropriate gas pressure to support a mass and a load of the vehicle body, a large operating cross-sectional area of the piston is generally required for the hydro-pneumatic spring, so a flow of the hydraulic fluid discharged or flowing in by the hydro-pneumatic spring during a telescopic movement is greater. At present, the hydraulic fluid discharged or flowing in by the related damping device during the telescopic movement can merely flow along a corresponding flow path, in order to meet a requirement of the hydraulic fluid flow for a large flow during that the hydro-pneumatic spring is in operation, the damping valve and various hydraulic fluid channels are required to have a large flow cross-sectional area. However, due to a large quantity of hydraulic fluid channels for the hydraulic fluid to flow through on the damping device, a plurality of hydraulic fluid channels with the large flow cross-sectional area may occupy a large amount of space, resulting in increasing an overall volume of the damping device. Correspondingly, an internal space of the related damping device may be occupied by the hydraulic fluid channels, and it is difficult to add other functional devices. Since the related damping device is required to have a large space for assembling between the wheel and the frame of the vehicle, an application model of the damping device is limited.

### SUMMARY

In view of this, it is necessary to provide a hydro-pneumatic spring device capable of regulating a damping force for solving the foregoing technical problem.

The hydro-pneumatic spring device capable of regulating the damping force includes a liquid reservoir, a hydraulic cylinder, and a damper. The hydraulic cylinder includes a cylinder barrel component and a connecting rod and piston component, the connecting rod and piston component is slidably mounted in the cylinder barrel component, and the cylinder barrel component is divided into a rod cavity and a rodless cavity via the connecting rod and piston component. The damper includes a first damping valve, a second damping valve, and a valve body, both the first damping valve and the second damping valve are mounted on the valve body, and the rodless cavity is capable of being in communication with the reservoir and the rod cavity via the first damping valve and the second damping valve, respectively, or, the rodless cavity is capable of being in communication with the rod cavity and the reservoir via the first damping valve and the second damping valve, respectively.

It may be understood that the valve body is configured to assemble the first damping valve and the second damping valve together, so that when the hydraulic cylinder is compressed or stretched, both the first damping valve and the second damping valve can participate in hydraulic fluid circulation. In this process, by adjusting a circulation characteristic of the first damping valve and the second damping valve, when the hydro-pneumatic spring device capable of regulating the damping force is in operation, a movement damping force can be adjusted when the hydraulic cylinder performs stretching motion and compression motion, thereby implementing hydraulic fluid diversion and combination.

In an embodiment, the valve body is provided with a first hydraulic fluid channel, a second hydraulic fluid channel, and a third hydraulic fluid channel, the rodless cavity is capable of being in communication with the first damping valve and the second damping valve via the first hydraulic fluid channel, the rod cavity is capable of being in communication with the second damping valve via the second hydraulic fluid channel, and the liquid reservoir is capable of being in communication with the first damping valve via the third hydraulic fluid channel; or, the rod cavity is capable of being in communication with the first damping valve via the third oil channel, and the liquid reservoir is capable of being in communication with the second damping valve via the second hydraulic fluid channel.

In an embodiment, the first damping valve includes a first main valve and a first auxiliary valve which are in communication with each other, and the first main valve is configured to control a flow of hydraulic fluid in the first auxiliary valve; and the second damping valve includes a second main valve and a second auxiliary valve which are in communication with each other, and the second main valve is configured to control a flow of hydraulic fluid in the second auxiliary valve.

In an embodiment, the valve body is provided with a first main valve cavity and a first auxiliary valve cavity, the first main valve and the first auxiliary valve are disposed in the first main valve cavity and the first auxiliary valve cavity, respectively, the first main valve includes a valve core of the first main valve and an elastic member of the first main valve, the valve core of the first main valve is slidably disposed in the first main valve cavity, the first main valve cavity is divided into a front cavity of the first main valve and a rear cavity of the first main valve by the valve core of the first main valve, two ends of the elastic member of the first main valve abut against the valve core of the first main valve and an inner wall of the first main valve cavity, respectively, the first auxiliary valve includes a valve core of the first auxiliary valve and an elastic member of the first auxiliary valve, the valve core of the first auxiliary valve is slidably disposed in the first auxiliary valve cavity, the first auxiliary valve cavity is divided into an outer cavity of the first auxiliary valve, an inner cavity of the first auxiliary valve, and a side cavity of the first auxiliary valve, and two ends of the elastic member of the first auxiliary valve abut against an inner wall of the inner cavity of the first auxiliary valve and the valve core of the first auxiliary valve, respectively; and the valve body is provided with a second main valve cavity and a second auxiliary valve cavity, the second main valve and the second auxiliary valve are disposed in the second main valve cavity and the second auxiliary valve cavity, respectively, the second main valve includes a valve core of the second main valve and an elastic member of the second main valve, the valve core of the second main valve is slidably disposed in the second main valve cavity, the second main valve cavity is divided into a front cavity of the second main valve and a rear cavity of the second main valve by the valve core of the second main valve, respectively, two ends of the elastic member of the second main valve abut against the valve core of the second main valve and an inner wall of the second main valve cavity, respectively, the second auxiliary valve includes a valve core of the second auxiliary valve and an elastic member of the second auxiliary valve, the valve core of the second auxiliary valve is slidably disposed in the second auxiliary valve cavity, the second auxiliary valve cavity is divided into an outer cavity of the second auxiliary valve, an inner cavity of the second auxiliary valve, and a side cavity of the second auxiliary valve by the valve core of the second auxiliary valve, and two ends of the elastic member of the second auxiliary valve abut against an inner wall of the inner cavity of the second auxiliary valve and the valve core of the second auxiliary valve, respectively.

In an embodiment, the first hydraulic fluid channel is in communication with the outer cavity of the first auxiliary valve and the side cavity of the second auxiliary valve, respectively, the second hydraulic fluid channel is in communication with the outer cavity of the second auxiliary valve, and the third hydraulic fluid channel is in communication with the side cavity of the first auxiliary valve.

In an embodiment, the outer cavity of the first auxiliary valve is in communication with the inner cavity of the first auxiliary valve via a hydraulic fluid hole of the first auxiliary valve, or, the side cavity of the first auxiliary valve is in communication with the inner cavity of the first auxiliary valve via the hydraulic fluid hole of the first auxiliary valve; and the outer cavity of the second auxiliary valve is in communication with the inner cavity of the second auxiliary valve via a hydraulic fluid hole of the second auxiliary valve, or, the side cavity of the second auxiliary valve is in communication with the inner cavity of the second auxiliary valve via the hydraulic fluid hole of the second auxiliary valve.

In an embodiment, when the hydraulic fluid hole of the first auxiliary valve is configured to be in communication with the outer cavity of the first auxiliary valve and the inner cavity of the first auxiliary valve and the hydraulic fluid hole of the second auxiliary valve is configured to be in communication with the outer cavity of the second auxiliary valve and the inner cavity of the second auxiliary valve, the first hydraulic fluid channel is further in communication with the rear cavity of the second main valve, the second hydraulic fluid channel is in communication with the rod cavity, and the third hydraulic fluid channel is further in communication with the rear cavity of the first main valve and the liquid reservoir; and when the hydraulic fluid hole of the first auxiliary valve is configured to be in communication with the side cavity of the first auxiliary valve and the inner cavity of the first auxiliary valve and the hydraulic fluid hole of the second auxiliary valve is configured to be in communication with the side cavity of the second auxiliary valve and the inner cavity of the second auxiliary valve, the first hydraulic fluid channel is further in communication with the rear cavity of the first main valve, the second hydraulic fluid channel is further in communication with the rear cavity of the second main valve and the liquid reservoir, and the third hydraulic fluid channel is in communication with the rod cavity.

In an embodiment, the hydraulic fluid hole of the first auxiliary valve is disposed on the valve core of the first auxiliary valve or the valve body, and the hydraulic fluid hole of the second auxiliary valve is disposed on the valve core of the second auxiliary valve or the valve body.

In an embodiment, the first main valve further includes a regulating rod of the first main valve, the second main valve further includes a regulating rod of the second main valve, and both the regulating rod of the first main valve and the regulating rod of the second main valve are movably mounted on the valve body and abut against the first main valve and the second main valve, respectively.

In an embodiment, the liquid reservoir is provided with a gas-liquid spacing device, and the liquid reservoir is capable of being divided into a liquid storage cavity and a gas storage cavity by the gas-liquid spacing device.

It may be understood that a gas-liquid spacing device is configured to separate the liquid storage cavity from the gas storage cavity in the liquid reservoir. In this way, separation of the hydraulic fluid from a gas in the liquid reservoir may be ensured, so as to prevent foaming of the hydraulic fluid in the liquid reservoir.

In an embodiment, the liquid reservoir is provided with either or both of a liquid charging and discharging interface and a gas charging and discharging interface, the liquid charging and discharging interface is configured to allow hydraulic fluid in the liquid reservoir to be replenished and discharged; and the gas charging and discharging interface is configured to allow gas in the liquid reservoir to be replenished and discharged, in order to adjust an initial position of the connecting rod and piston component on the cylinder barrel component.

It may be understood that the hydraulic fluid in the liquid reservoir is replenished or discharged via the liquid charging and discharging interface, and the gas in the liquid reservoir is replenished or discharged via the gas charging and discharging interface. In this way, by cooperation between replenishing or discharging the hydraulic fluid in the liquid reservoir and replenishing or discharging the gas in the liquid reservoir, a static balance position and rigidity of a suspension system can be adjusted when the hydro-pneumatic spring device is assembled to a vehicle.

A suspension system is further provided in the present invention, including the foregoing hydro-pneumatic spring device capable of regulating the damping force.

Because of application of the foregoing technical solutions, the present invention has the following advantages compared with the related art.
1. In the present invention, the foregoing technical solutions are used. Since a connecting rod of the connecting rod and piston component is disposed in the rod cavity of the hydraulic cylinder, when the hydraulic cylinder performs a telescopic movement, a volume variation of the rodless cavity is greater than that of the rod cavity. Therefore, when the hydraulic cylinder performs a compression motion, the hydraulic fluid discharged from the rodless cavity is replenished to the rod cavity by the second damping valve, while a part of the hydraulic fluid is discharged. After the part of the hydraulic fluid flows through the first damping valve to generate a pressure drop, the part of the hydraulic fluid is fed into the liquid reservoir. The pressure drop generated when the hydraulic fluid flows through the first damping valve may be changed by adjusting a flow characteristic of the first damping valve, i.e., a compression motion damping force can be adjusted. Alternatively, the hydraulic fluid discharged from the rodless cavity is replenished to the rod cavity by the first damping valve, while a part of the hydraulic fluid is discharged. After the part of the hydraulic fluid flows through the second damping valve to generate a pressure drop, the part of the hydraulic fluid is fed into the liquid reservoir. The pressure drop generated when the hydraulic fluid flows through the second damping valve may be changed by adjusting a flow characteristic of the second damping valve, i.e., the compression motion damping force can be adjusted. In other words, the hydraulic fluid discharged from the rodless cavity is split by two damping valves. Similarly, when the hydraulic cylinder performs a stretching motion, the hydraulic fluid discharged from the liquid reservoir enters the rodless cavity by the first damping valve, and after hydraulic fluid discharged from the rod cavity flows through the second damping valve to generate a pressure drop, the hydraulic fluid enters the rodless cavity. The pressure drops generated when the hydraulic fluid flows through the second damping valve may be changed by adjusting the flow characteristic of the second damping valve, i.e., a stretching motion damping force can be adjusted. Alternatively, the hydraulic fluid discharged from the liquid reservoir enters the rodless cavity by the second damping valve, and after hydraulic fluid discharged from the rod cavity flows through the second damping valve to generate a pressure drop, the hydraulic fluid enters the rodless cavity. The pressure drops generated when the hydraulic fluid flows through the first damping valve may be changed by adjusting the flow characteristic of the second damping valve, i.e., the stretching movement damping force can be adjusted. In other words, the hydraulic fluid flows together into the rodless cavity by two damping valves. Therefore, in the present invention, divergence or convergence of the hydraulic fluid discharged from or flowing into the hydraulic cylinder during the telescopic movement can significantly reduce a requirement of a flow cross-sectional area of the damping valve and various hydraulic fluid channels, thereby reducing an overall size and a weight of a related product, reducing manufacturing costs, and facilitating a space arrangement. In the case that a volume of the hydro-pneumatic spring device is the same, the product in the present invention can apply a requirement of a larger flow of hydraulic fluid flow, i.e., apply to a higher-speed compression motion and stretching motion.
2. In the present invention, the foregoing technical solutions are used. When the hydraulic cylinder performs the compression motion, the motion damping force is controlled by the first main valve and the first auxiliary valve of the first damping valve, and when the hydraulic cylinder performs the stretching motion, the motion damping force is controlled by the second main valve and the second auxiliary valve of the second damping valve. Alternatively, when the hydraulic cylinder performs the compression motion, the motion damping force is controlled by the second main valve and the second auxiliary valve of the second damping valve, and when the hydraulic cylinder performs the stretching motion, the motion damping force is controlled by the first main valve and the first auxiliary valve of the first damping valve. Therefore, independent adjustment of a real-time motion damping force in the two directions of compression and stretching motions of the hydraulic cylinder is implemented, so that the adjustment of the motion damping force is more straightforward, and adjustment precision of the motion damping force is improved.
3. In the present invention, the foregoing technical solutions are used. Rigidity of the hydro-pneumatic spring device may be changed by replenishing or discharging a high-pressure gas in the liquid reservoir. That is, a static balance position of the hydro-pneumatic spring device may be changed by replenishing or discharging the high-pressure gas in the liquid reservoir or by replenishing or discharging the hydraulic fluid in the liquid reservoir, thereby adjusting a height of the vehicle body from the ground and a vehicle body posture. In addition, the motion damping force may be adjusted while adjusting the static balance position, thereby controlling a compression or stretching speed of the hydraulic cylinder, so that the hydraulic cylinder can perform compression or stretching motion at a certain speed.

### BRIEF DESCRIPTION OF THE DRAWINGS

In order to illustrate the embodiments of the present invention or the related art more clearly, the drawings used in the embodiments or the related art will be described briefly. Apparently, the following described drawings are merely for the embodiments of the present invention, and other drawings can be derived by those skilled in the art without any creative effort.
FIG. 1 is a schematic hydraulic diagram of a hydro-pneumatic spring device capable of regulating a damping force in an embodiment of the present invention.
FIG. 2 is a schematic hydraulic diagram of a hydro-pneumatic spring device capable of regulating a damping force in an embodiment of the present invention.
FIG. 3 is a schematic hydraulic diagram of a hydro-pneumatic spring device capable of regulating a damping force in an embodiment of the present invention.
FIG. 4 is a schematic hydraulic diagram of a hydro-pneumatic spring device capable of regulating a damping force in an embodiment of the present invention.
FIG. 5 is a schematic structural diagram of a hydro-pneumatic spring device capable of regulating a damping force in an embodiment of the present invention.
FIG. 6 is a schematic structural diagram of a hydro-pneumatic spring device capable of regulating a damping force in an embodiment of the present invention.

### DETAILED DESCRIPTION

The following clearly and completely describes the technical solutions in the implementation manners of the present invention with reference to the accompanying drawings in the implementation manners of the present invention. Apparently, the described implementation manners are merely some but not all of the implementation manners of the present invention. Based on the implementation manners of the present invention, all other implementation manners obtained by one skilled in the art without creative efforts fall within the protection scope of the present invention.

It should be noted that when an element is referred to as "set on" another element, the element may be directly set on the another element or there may be a centered element. When an element is considered to be "disposed on" another element, the element may be directly disposed on the another element or there may be a centered element at the same time. When an element is considered to be "fixed to" another element, the element may be directly fixed to the another element or there may be a centered element at the same time.

Unless otherwise defined, all technical and scientific terms used herein are of the same meaning as is generally understood by those skilled in the art. The terms used in the description of the present invention are merely intended to describe specific implementation manners, and are not intended to limit present invention. The term "and/or" as used herein includes any and all combinations of one or more associated listed items.

A hydro-pneumatic spring device capable of regulating a damping force provided in the present invention is applied to a suspension system of a vehicle. The hydro-pneumatic spring device capable of regulating the damping force is mounted between a frame or a vehicle body and an axle or a wheel to provide a spring function for lifting the vehicle body, absorb a shock force transmitted from an irregular road surface to the frame or the vehicle body during driving of the vehicle, and inhibit and attenuate vibration caused thereby.

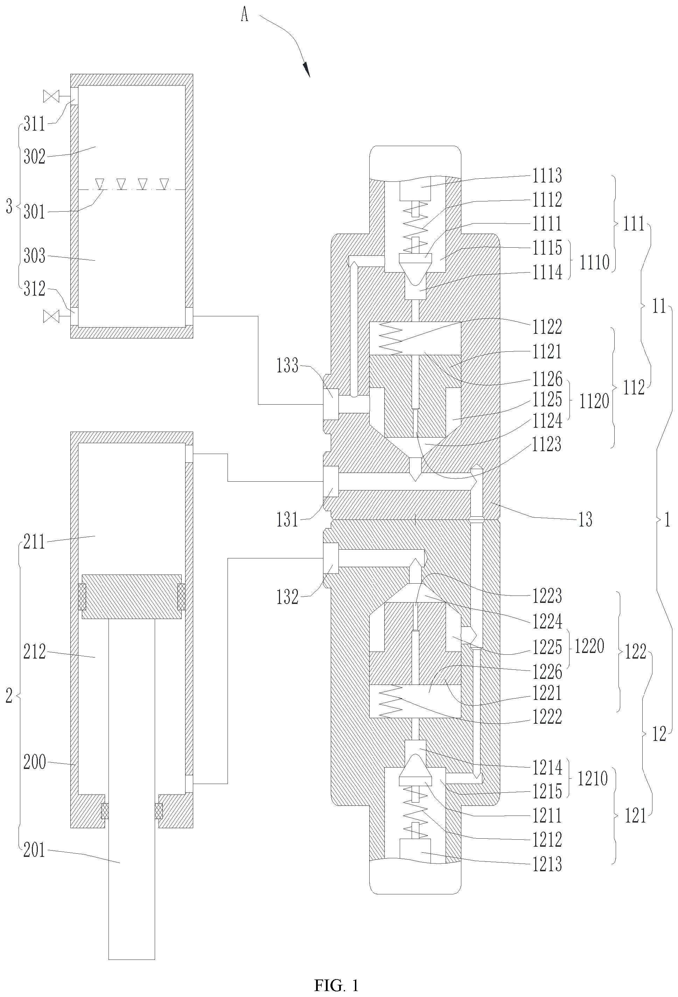

Referring to FIG. 1 to FIG. 6, a hydro-pneumatic spring device A capable of regulating a damping force provided in the present invention includes a liquid reservoir 3, a hydraulic cylinder 2, and a damper 1. The hydraulic cylinder 2 includes a cylinder barrel component 200 and a connecting rod and piston component 201, the connecting rod and piston component 201 is slidably mounted in the cylinder barrel component 200, and the cylinder barrel component 200 is divided into a rod cavity 212 and a rodless cavity 212 via the connecting rod and piston component 201. The damper 1 includes a first damping valve 11, a second damping valve 12, and a valve body 13, both the first damping valve 11 and the second damping valve 12 are mounted on the valve body 13 and are disposed independently of each other, and the rodless cavity 211 is capable of being in communication with the liquid reservoir 3 and the rod cavity 212 via the first damping valve 11 and the second damping valve 12, respectively, or, the rodless cavity 211 is capable of being in communication with the rod cavity 212 and the liquid reservoir 3 via the first damping valve 11 and the second damping valve 12, respectively.

It should be noted that, when the hydro-pneumatic spring device A capable of regulating the damping force provided in the present invention is assembled into the vehicle, the cylinder barrel component 200 and the connecting rod and piston component 201 of the hydraulic cylinder 2 are configured to assemble and fasten with wheels and the frame of the vehicle, so that when the vehicle is traveling on an uneven road, a movement of the connecting rod and piston component 201 in the cylinder barrel component 200 can be implemented in a movement towards or away from each other between the wheels and the frame.

It may be understood that the valve body 13 is configured to assemble the first damping valve 11 and the second damping valve 12 together, so that when the hydraulic cylinder 2 is compressed or stretched, both the first damping valve 11 and the second damping valve 12 can participate in hydraulic fluid circulation. In this process, circulation characteristics of the first damping valve 11 and the second damping valve 12 may be adjusted, so as to adjust a movement damping force of the hydraulic cylinder 2 when the hydraulic cylinder 2 performs stretching motion and compression motion.

Referring to FIG. 1 to FIG. 6, when the hydro-pneumatic spring device is in operation, the damper 1, the rodless cavity 211 and the rod cavity 212 of the hydraulic cylinder 2, and channels of hydraulic fluid circuits may be filled with hydraulic fluid. A certain quantity of hydraulic fluid may be stored in the liquid reservoir 3, and a proper quantity of hydraulic fluid may be reserved in a lower part of the liquid reservoir 3 when the hydraulic cylinder 2 stretches to the limit, and a proper space may be reserved between an upper part of the liquid reservoir 3 and the hydraulic fluid to form a gas storage cavity 302 when the hydraulic cylinder 2 compresses to the limit. The gas storage cavity 302 of the liquid reservoir 3 may be filled with a high-pressure gas with a proper pressure, and the hydraulic fluid in the liquid reservoir 3 may generate a pressure on a connected hydraulic fluid circuit under the action of the high-pressure gas. Since a connecting rod of the connecting rod and piston component 201 is disposed inside the rod cavity 212 of the hydraulic cylinder 2, a piston operating cross-sectional area at a side of the rodless cavity 211 is greater than that at a side of the rod cavity 212. Therefore, the connecting rod and piston component 201 may generate, under the action of the hydraulic fluid pressure, a force that moves towards the rod cavity 212, i.e., a stretching force (spring force) that enables the hydraulic cylinder 2 to perform stretching motion.

### The first embodiment

Referring to FIG. 1, FIG. 2, and FIG. 5, the valve body 13 may be provided with a first hydraulic fluid channel 131, a second hydraulic fluid channel 132, and a third hydraulic fluid channel 133, the rodless cavity 211 is capable of being in communication with the first damping valve 11 and the second damping valve 12 via the first hydraulic fluid channel 131, the rod cavity 212 is capable of being in communication with the second damping valve 12 via the second hydraulic fluid channel 132, and the liquid reservoir 3 is capable of being in communication with the first damping valve 11 via the third hydraulic fluid channel 133.

In short, when the hydraulic cylinder 2 compresses, the hydraulic fluid in the rodless cavity 211 may flow to the first damping valve 11 and the second damping valve 12 respectively via the first hydraulic fluid channel 131, the hydraulic fluid that flows to the first damping valve 11 may flow into the liquid reservoir 3 after being adjusted by the first damping valve 11, and the hydraulic fluid that flows to the liquid reservoir 3 may flow into the rod cavity 212 via the second damping valve 12. When the hydraulic cylinder 2 stretches, the hydraulic fluid in the liquid reservoir 3 may flow into the rodless cavity 211 via the first damping valve 11, and the hydraulic fluid in the rod cavity 212 may flow into the rodless cavity 211 after being adjusted by the second damping valve 12.

The valve body 13 may be provided with a first main valve cavity 1110, a first auxiliary valve cavity 1120, a second main valve cavity 1210, and a second auxiliary valve cavity 1220. The first damping valve 11 may include a first main valve 111 and a first auxiliary valve 112 that are in communication with each other, and the first main valve 111 and the first auxiliary valve 112 may be disposed in the first main valve cavity 1110 and the first auxiliary valve cavity 1120, respectively. The first main valve 111 may include a valve core 1111 of the first main valve and an elastic member 1112 of the first main valve, the valve core 1111 of the first main valve may be disposed in the first main valve cavity 1110, the valve core 1111 of the first main valve is slidably disposed in the first main valve cavity 1110, the first main valve cavity 1110 may be divided into a front cavity 1114 of the first main valve and a rear cavity 1115 of the first main valve by the valve core 1111 of the first main valve. Two ends of the elastic member 1112 of the first main valve may abut against the valve core 1111 of the first main valve and an inner wall of the first main valve cavity 1110, respectively. The first auxiliary valve 112 may include a valve core 1121 of the first auxiliary valve and an elastic member 1122 of the first auxiliary valve, the valve core 1121 of the first auxiliary valve may be slidably disposed in the first auxiliary valve cavity 1120, the first auxiliary valve cavity 1120 may be divided into an outer cavity 1124 of the first auxiliary valve, an inner cavity 1126 of the first auxiliary valve, and a side cavity 1125 of the first auxiliary valve by the valve core of the second main valve, two ends of the elastic member 1122 of the first auxiliary valve may abut against an inner wall of the inner cavity 1126 of the first auxiliary valve and the valve core 1121 of the first auxiliary valve, respectively, and the outer cavity 1124 of the first auxiliary valve may be in communication with the inner cavity 1126 of the first auxiliary valve via a hydraulic fluid hole 1123 of the first auxiliary valve.

The second damping valve 12 may include a second main valve 121 and a second auxiliary valve 122 that are in communication with each other. The second main valve 121 and the second auxiliary valve 122 may be disposed in the second main valve cavity 1210 and the second auxiliary valve cavity 1220, respectively. The second main valve 121 may include a valve core 1211 of the second main valve and an elastic member 1212 of the second main valve. The valve core 1211 of the second main valve may be slidably disposed in the second main valve cavity 1210. The second main valve cavity 1210 may be divided into a front cavity 1214 of the second main valve and a rear cavity 1215 of the second main valve by the valve core 1211 of the second main valve. Two ends of the elastic member 1212 of the second main valve may abut against the valve core 1211 of the second main valve and an inner wall of the second main valve cavity 1210, respectively. The second auxiliary valve 122 may include a valve core 1221 of the second auxiliary valve and an elastic member 1222 of the second auxiliary valve. The valve core 1221 of the second auxiliary valve may be slidably disposed in the second auxiliary valve cavity 1220. The second auxiliary valve cavity 1220 may be divided into an outer cavity 1224 of the second auxiliary valve, an inner cavity 1226 of the second auxiliary valve, and a side cavity 1225 of the second auxiliary valve by the valve core 1221 of the second auxiliary valve. Two ends of the elastic member 1222 of the second auxiliary valve may abut against an inner wall of the inner cavity 1226 of the second auxiliary valve and the valve core 1221 of the second auxiliary valve, respectively. The outer cavity 1224 of the second auxiliary valve may be in communication with the inner cavity 1226 of the second auxiliary valve via a hydraulic fluid hole 1223 of the second auxiliary valve. The front cavity 1114 of the first main valve may be located in a front part of the first main valve cavity 1110, the front cavity 1214 of the second main valve may be located in a front part of the second main valve cavity 1210, the outer cavity 1124 of the first auxiliary valve may be located in a lower part of the first auxiliary valve cavity 1120, and the outer cavity 1224 of the second auxiliary valve may be located in a lower part of the second auxiliary valve cavity 1220.

The first hydraulic fluid channel 131 may be in communication with the rear cavity 1215 of the second main valve, the outer cavity 1124 of the first auxiliary valve, and the side cavity 1225 of the second auxiliary valve, respectively, the second hydraulic fluid channel 132 may be in communication with the outer cavity 1224 of the second auxiliary valve, and the third hydraulic fluid channel 133 may be in communication with the rear cavity 1115 of the first main valve and the side cavity 1125 of the first auxiliary valve, respectively.

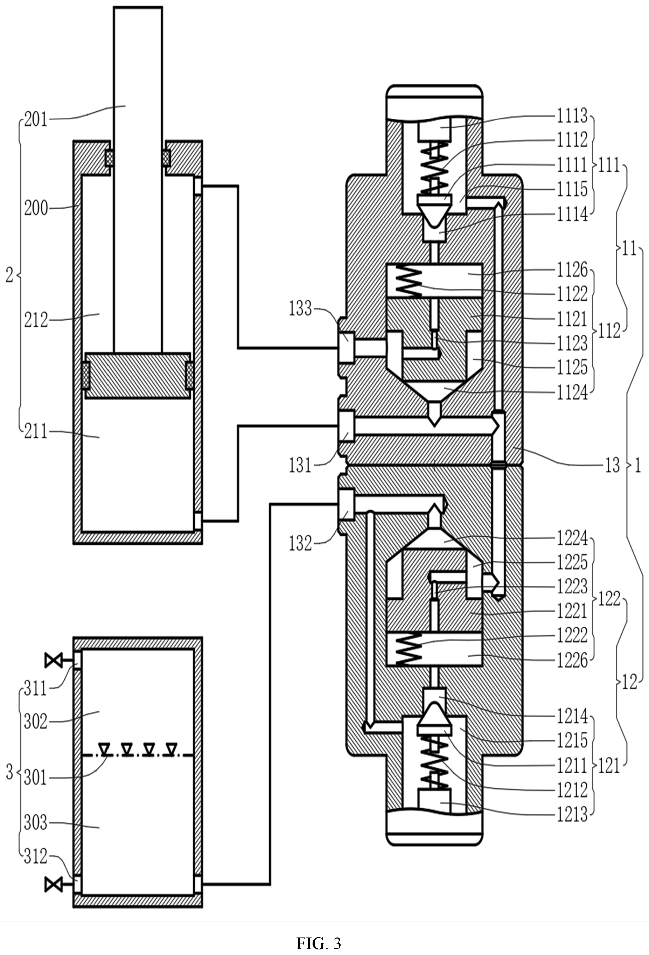

Referring to FIG. 1 and FIG. 3, the hydraulic fluid hole 1123 of the first auxiliary valve may be provided on the valve core 1121 of the first auxiliary valve, and the hydraulic fluid hole 1223 of the second auxiliary valve may be provided on the valve core 1221 of the second auxiliary valve.

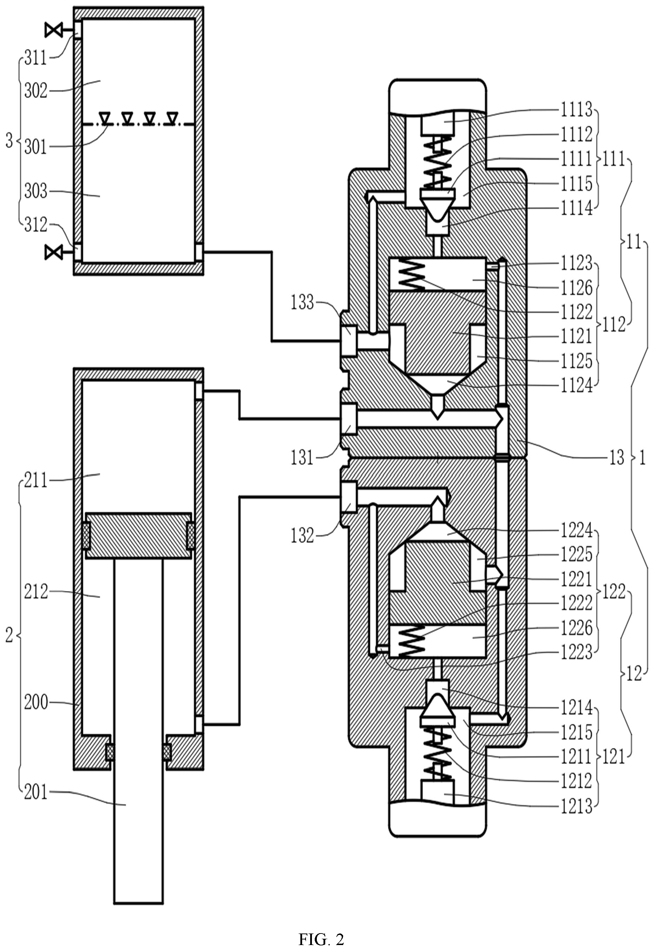

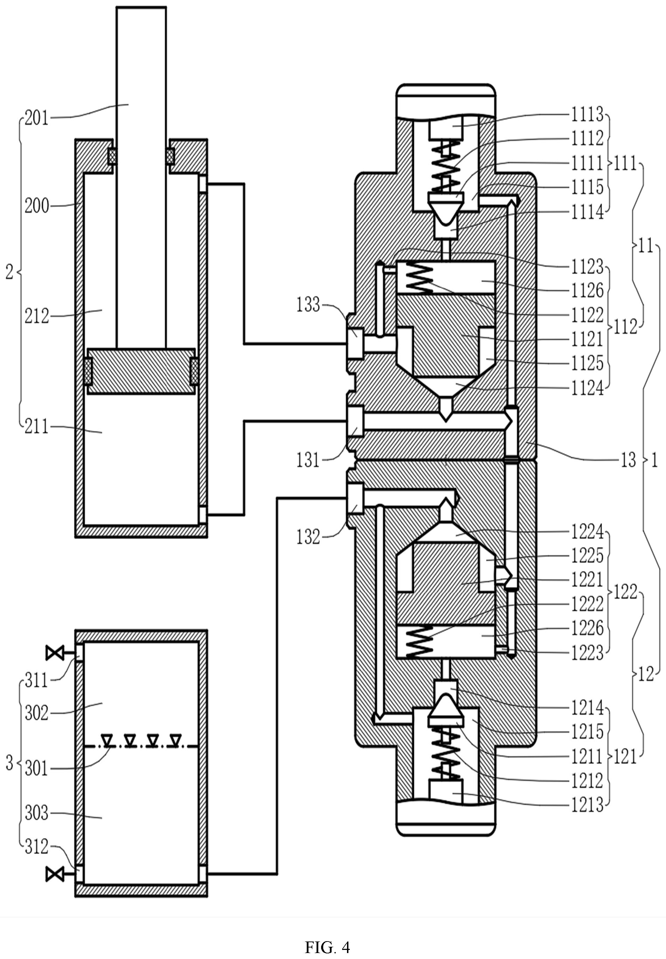

Referring to FIG. 2 and FIG. 4, the hydraulic fluid hole 1123 of the first auxiliary valve may be provided on the valve body 13, and the hydraulic fluid hole 1223 of the second auxiliary valve may be provided on the valve body 13.

Referring to FIG. 1 and FIG. 2, the hydraulic fluid hole 1123 of the first auxiliary valve is configured to be in communication with the inner cavity 1126 of the first auxiliary valve and the outer cavity 1124 of the first auxiliary valve, and the hydraulic fluid hole 1223 of the second auxiliary valve is configured to be in communication with the inner cavity 1226 of the second auxiliary valve and the outer cavity 1224 of the second auxiliary valve.

Referring to FIG. 3 and FIG. 4, the hydraulic fluid hole 1123 of the first auxiliary valve is configured to be in communication with the inner cavity 1126 of the first auxiliary valve and the side cavity 1125 of the first auxiliary valve, and the hydraulic fluid hole 1223 of the second auxiliary valve is configured to be in communication with the inner cavity 1226 of the second auxiliary valve and the side cavity 1225 of the second auxiliary valve.

When a stretching force of the hydraulic cylinder 2 is greater than a compression force applied to the hydraulic cylinder 2 from the outside, or, the hydraulic cylinder 2 performs the stretching motion due to an external force, referring to FIG. 1, FIG. 2, and FIG. 5, a flow path of the hydraulic fluid may be shown in broken lines n3 to n1, and an operating process of the first damping valve 11 may be as follows.

Firstly, the hydraulic fluid in the liquid reservoir 3 may enter the rear cavity 1115 of the first main valve and the side cavity 1125 of the first auxiliary valve of the first damping valve 11 through the third hydraulic fluid channel 133 under the action of a high-pressure gas in the gas storage cavity 302.

Since the first main valve 111 and the first auxiliary valve 112 of the first damping valve 11 are in a normal closed state at the initial time, the hydraulic fluid entering from the third hydraulic fluid channel 133 cannot flow into the inner cavity 1126 of the first auxiliary valve. However, the hydraulic fluid in the inner cavity 1126 of the first auxiliary valve may flow out from the hydraulic fluid hole 1123 of the first auxiliary valve. Therefore, when the flow and the pressure of the hydraulic fluid entering from the third hydraulic fluid channel 133 gradually increase, the hydraulic fluid pressure in the side cavity 1125 of the first auxiliary valve may be gradually greater than that in the inner cavity 1126 of the first auxiliary valve, thereby generating a pressure difference. The valve core 1121 of the first auxiliary valve may generate an opening force to allow the valve core 1121 of the first auxiliary valve to move towards the inner cavity 1126 of the first auxiliary valve under the action of the pressure difference, and the opening force may increase gradually as the pressure difference increases gradually.

When the opening force is less than or equal to an elastic force of the elastic member 1122 of the first auxiliary valve acting on the valve core 1121 of the first auxiliary valve, the valve core 1121 of the first auxiliary valve may remain abutting against the lower part of the first auxiliary valve cavity 1120 under the elastic force of the elastic member 1122 of the first auxiliary valve, and the hydraulic fluid entering the side cavity 1125 of the first auxiliary valve cannot flow to the outer cavity 1124 of the first auxiliary valve, and the first auxiliary valve 112 may remain in a closed state.

It should be noted that when an abutment between the valve core 1121 of the first auxiliary valve and the lower part of the first auxiliary valve cavity 1120 is designed as a non-sealing structure, the hydraulic fluid entering the side cavity 1125 of the first auxiliary valve may flow to the outer cavity 1124 of the first auxiliary valve by a preset slit at the abutment after the valve core 1121 of the first auxiliary valve abuts against the lower part of the first auxiliary valve cavity 1120, and/or by a preset small hole or groove on the valve core 1121 of the first auxiliary valve or the lower part of the first auxiliary valve cavity 1120, and the first auxiliary valve 112 may be in a throttling state.

When the opening force is greater than the elastic force of the elastic member 1122 of the first auxiliary valve acting on the valve core 1121 of the first auxiliary valve, the valve core 1121 of the first auxiliary valve may move towards the inner cavity 1126 of the first auxiliary valve and compress the elastic member 1122 of the first auxiliary valve under the opening force. In this case, the valve core 1121 of the first auxiliary valve and the lower part of the first auxiliary valve cavity 1120 may be gradually separated to form a first auxiliary valve channel, the hydraulic fluid entering the side cavity 1125 of the first auxiliary valve may flow to the outer cavity 1124 of the first auxiliary valve through the first auxiliary valve channel, and the first auxiliary valve 112 may be in an overflow state. When the valve core 1121 of the first auxiliary valve stops moving after moving towards the inner cavity 1126 of the first auxiliary valve to a preset position under the opening force, the first auxiliary valve 112 may be in the throttling state again.

Finally, the hydraulic fluid in the outer cavity 1124 of the first auxiliary valve may enter the rodless cavity 211 of the hydraulic cylinder 2 through the first hydraulic fluid channel 131.

Since the connecting rod of the connecting rod and piston component 201 is disposed in the rod cavity 212 of the hydraulic cylinder 2, the piston operating cross-sectional area at the side of the rodless cavity 211 may be greater than that at the side of the rod cavity 212. Therefore, the connecting rod and piston component 201 may move towards the rod cavity 212 due to the hydraulic fluid entering the rod cavity 211 and the hydraulic fluid pressure, i.e., the hydraulic cylinder 2 may perform stretching motion.

It should be noted that the elastic member 1122 of the first auxiliary valve acts on the valve core 1121 of the first auxiliary valve with a relatively small elastic force, which may be overcome by a very small opening force. That is, a very small pressure difference may cause the first auxiliary valve 112 to be in the overflow state. Therefore, when the hydraulic fluid flows from the side cavity 1125 of the first auxiliary valve to the outer cavity 1124 of the first auxiliary valve, a small pressure drop that is not related to a flow may be generated between the side cavity 1125 of the first auxiliary valve and the outer cavity 1124 of the first auxiliary valve. In other words, the hydraulic fluid in the liquid reservoir 3 may flow through the first damping valve 11 under the high-pressure gas in the gas storage cavity 302 to enter the rodless cavity 211, so that the hydraulic cylinder 2 may perform the stretching motion. In this process, the first damping valve 11 may not cause the hydraulic cylinder 2 to generate a stretching motion damping force related to a stretching motion speed.

Referring to FIG. 1, FIG. 2, and FIG. 5, the flow path of the hydraulic fluid may be shown in broken lines n2 to n1, and an operating process of the second damping valve 12 may be as follows.

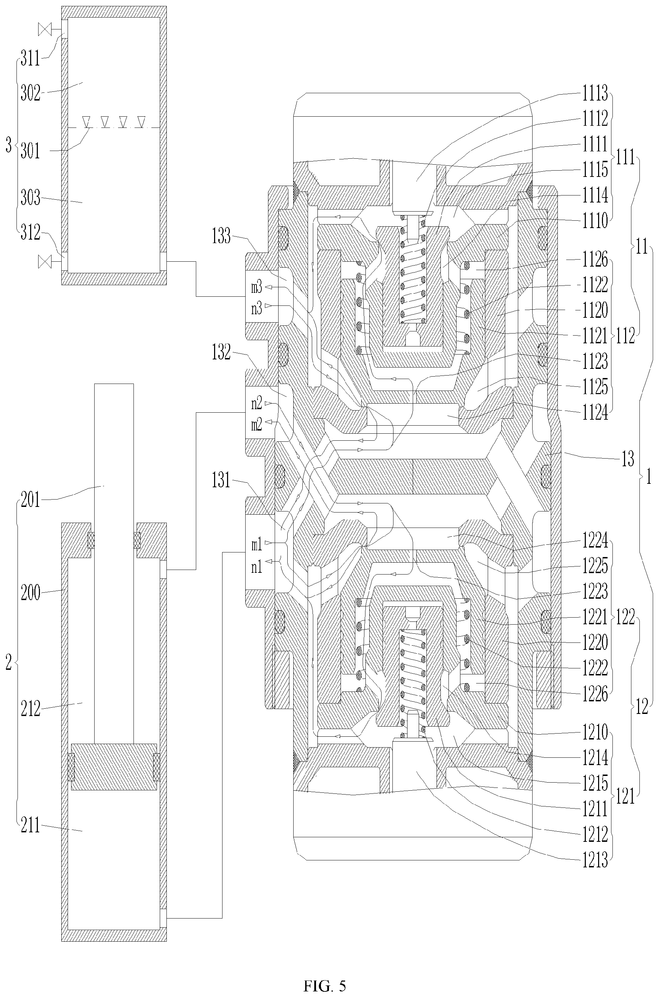

The stretching motion of the hydraulic cylinder 2 may increase a volume of the rodless cavity 211 to collect and store the hydraulic fluid, so that a volume of the rod cavity 212 may be decreased to discharge the hydraulic fluid. Referring to FIG. 1 and FIG. 5, the discharged hydraulic fluid may enter the outer cavity 1224 of the second auxiliary valve through the second hydraulic fluid channel 132, and then enter the inner cavity 1226 of the second auxiliary valve and the front cavity 1214 of the second main valve through the hydraulic fluid hole 1223 of the second auxiliary valve. Alternatively, referring to FIG. 2, the discharged hydraulic fluid may enter the outer cavity 1224 of the second auxiliary valve through the second hydraulic fluid channel 132, while entering the inner cavity 1226 of the second auxiliary valve and the front cavity 1214 of the second main valve through the hydraulic fluid hole 1223 of the second auxiliary valve.

Since the second main valve 121 of the second damping valve 12 is in a normal closed state at the initial time, the hydraulic fluid entering the front cavity 1214 of the second main valve cannot flow to the rear cavity 1215 of the second main valve. When the flow and the pressure of the hydraulic fluid entering from the second hydraulic fluid channel 132 gradually increase, the hydraulic fluid pressure in the front cavity 1214 of the second main valve may also be gradually greater than that in the rear cavity 1215 of the second main valve, thereby generating a pressure difference. The valve core 1211 of the second main valve may generate an opening force to allow the valve core 1211 of the second main valve to move towards a regulating rod 1213 of the second main valve under the action of the pressure difference, and the opening force may increase gradually as the pressure difference increases gradually.

When the opening force is greater than an elastic force of the elastic member 1212 of the second main valve acting on the valve core 1211 of the second main valve, the valve core 1211 of the second main valve may move towards the regulating rod 1213 of the second main valve and compress the elastic member 1212 of the second main valve under the opening force. In this case, the valve core 1211 of the second main valve and the front part of the second main valve cavity 1210 may be gradually separated to form a second main valve channel, the hydraulic fluid entering the front cavity 1214 of the second main valve may flow to the rear cavity 1215 of the second main valve through the second main valve channel, and then the hydraulic fluid may enter the rodless cavity 211 through the first hydraulic fluid channel 131.

Since the hydraulic fluid flowing from the front cavity 1214 of the second main valve to the rear cavity 1215 of the second main valve generates a pressure drop when flowing through the second main valve channel, when the flow and the pressure of the hydraulic fluid flowing through the second main valve channel continuously increase, a hydraulic fluid pressure difference, in which the hydraulic fluid pressure in the front cavity 1214 of the second main valve is greater than that in the rear cavity 1215 of the second main valve, may also continuously increase, and the opening force may also continuously increase. Firstly, the valve core 1211 of the second main valve may continue to move towards the regulating rod 1213 of the second main valve and compress the elastic member 1212 of the second main valve under the continuously increasing opening force, i.e., a flow cross-sectional area of the second main valve channel may gradually increase, and the second main valve 121 may be in the overflow state. Then, when the valve core 1211 of the second main valve moves to abut against the regulating rod 1213 of the second main valve, and the opening force is less than or equal to a position retaining force of the regulating rod 1213 of the second main valve, the valve core 1211 of the second main valve may be maintained in a position regulated by the regulating rod 1213 of the second main valve under the action of the regulating rod 1213 of the second main valve, i.e., the flow cross-sectional area of the second main valve channel may be maintained in a value regulated by the regulating rod 1213 of the second main valve, and the second main valve 121 may be in the throttling state. Then, when the opening force is greater than the position retaining force of the regulating rod 1213 of the second main valve, the valve core 1211 of the second main valve may push the regulating rod 1213 of the second main valve to continue to move together along a direction of the regulating rod 1213 of the second main valve under the action of the opening force, i.e., the flow cross-sectional area of the second main valve channel may be increased gradually again, and the second main valve 121 may be in the overflow state again.

It should be noted that the regulating rod 1213 of the second main valve may move up and down along an axial direction by electronic control to adjust an axial position of the regulating rod 1213 of the second main valve, so as to adjust a circulation characteristic (a flow-pressure curve) of the second main valve 121. The regulating rod 1213 of the second main valve may be disposed in a self-locking structure or a non-self-locking structure. For the self-locking structure, specifically, when an external force is applied to the regulating rod 1213 of the second main valve along the axial direction, the regulating rod 1213 of the second main valve cannot move along an applied force direction, and can remain in an adjusted position, i.e., the regulating rod 1213 of the second main valve may not move as the opening force applied to the valve core 1211 of the second main valve increases. For the non-self-locking structure, specifically, the regulating rod 1213 of the second main valve may further be set the position retaining force of the regulating rod 1213 of the second main valve along the axial direction by electrical control or a preset force value. When the external force applied to the regulating rod 1213 of the second main valve along the axial direction is less than or equal to the preset position retaining force, the regulating rod 1213 of the second main valve may be maintained in an adjusted axial position. When the external force applied to the regulating rod 1213 of the second main valve along the axial direction is greater than the preset position retaining force, the regulating rod 1213 of the second main valve may move along the applied force direction, i.e., the regulating rod 1213 of the second main valve may move as the opening force applied to the valve core 1211 of the second main valve increases, and a circulation characteristic of the second main valve 121 may further be adjusted by changing the position retaining force.

It should be noted that, in an operating process that the hydraulic fluid in the rod cavity 212 enters the rodless cavity 211 through the second main valve 121 of the second damping valve 12 under the action of the hydraulic cylinder 2 performing the stretching motion, the second main valve 121 can independently be in operation and can implement multi-stage multi-state control of the stretching motion damping force according to speed change of the stretching motion of the hydraulic cylinder 2. During implementation, when a speed of the stretching motion of the hydraulic cylinder 2 changes, a flow of the hydraulic fluid flowing through the second main valve 121 may also change, and the pressure drop generated when the hydraulic fluid flows through the second main valve 121 may also change. In addition, the second main valve 121 may be in an operating state corresponding to the flow and the pressure, for example, when the flow and the pressure reach certain regulation interval values or preset interval values, the second main valve 121 may be in the overflow state or the throttle state at a stage corresponding to the second main valve 121, and the circulation characteristic of the second main valve 121 may approach a required ideal curve after multi-stage multi-state control. In each stage of the second main valve 121, the operating state of the second main valve 121 may form a backpressure corresponding to a hydraulic fluid circuit at a side of the rod cavity 212, and a piston operating cross section at the side of the rod cavity 212 may generate a corresponding force under the action of the backpressure, i.e., the hydraulic cylinder 2 may generate the corresponding stretching motion damping force at each speed interval during the stretching motion. In other words, when the hydraulic cylinder 2 performs the stretching motion, the second main valve 121 of the second damping valve 12 can enable the hydraulic cylinder 2 to generate the stretching motion damping force corresponding to a stretching motion speed, and can adjust the circulation characteristic of the second main valve 121 in a preset and electronic control manner, so as to control a motion damping force characteristic (a motion speed-damping force curve) of the hydraulic cylinder 2 during the stretching motion to approach the required ideal curve.

After the second main valve channel of the second damping valve 12 is formed, referring to FIG. 1 and FIG. 5, the hydraulic fluid entering the second hydraulic fluid channel 132 may successively pass through the outer cavity 1224 of the second auxiliary valve, the hydraulic fluid hole 1223 of the second auxiliary valve, the inner cavity 1226 of the second auxiliary valve, and the front cavity 1214 of the second main valve, and may flow out through the second main valve channel. Alternatively, referring to FIG. 2, the hydraulic fluid entering from the second hydraulic fluid channel 132 may flow into the outer cavity 1224 of the second auxiliary valve, while passing through the hydraulic fluid hole 1223 of the second auxiliary valve, the inner cavity 1226 of the second auxiliary valve, and the front cavity 1214 of the second main valve, and flowing out through the second main valve channel. Since the hydraulic fluid flowing from the second hydraulic fluid channel 132 to the inner cavity 1226 of the second auxiliary valve generates a pressure drop when flowing through the hydraulic fluid hole 1223 of the second auxiliary valve, the hydraulic fluid pressure in the outer cavity 1224 of the second auxiliary valve may be greater than that in the inner cavity 1226 of the second auxiliary valve, thereby generating a pressure difference. The valve core 1221 of the second auxiliary valve may generate an opening force to allow the valve core 1221 of the second auxiliary valve to move towards the inner cavity 1226 of the second auxiliary valve under the action of the pressure difference. As the flow and the pressure of the hydraulic fluid that flows through the hydraulic fluid hole 1223 of the second auxiliary valve continuously increase, the pressure difference may also continuously increase, and the opening force may also continuously increase.

Since the second auxiliary valve 122 of the second damping valve 12 is in a normal closed state at the initial time, when the opening force is less than or equal to an elastic force that is applied to the valve core 1221 of the second auxiliary valve by the elastic member 1222 of the second auxiliary valve, the valve core 1221 of the second auxiliary valve may remain abutting against the lower part of the second auxiliary valve cavity 1220 under the elastic force of the elastic member 1222 of the second auxiliary valve, and the hydraulic fluid entering the outer cavity 1224 of the second auxiliary valve cannot flow to the side cavity 1225 of the second auxiliary valve, and the second auxiliary valve 122 may remain in a closed state.

It should be noted that when an abutment between the valve core 1221 of the second auxiliary valve and the lower part of the second auxiliary valve cavity 1220 is designed as a non-sealing structure, the hydraulic fluid entering the outer cavity 1224 of the second auxiliary valve may flow to the side cavity 1225 of the second auxiliary valve by a preset slit at the abutment after the valve core 1221 of the second auxiliary valve abuts against the lower part of the second auxiliary valve cavity 1220, and/or by a preset small hole or groove on the valve core 1221 of the second auxiliary valve or the lower part of the second auxiliary valve cavity 1220, and the second auxiliary valve 122 may be in a throttling state.

When the opening force is greater than the elastic force of the elastic member 1222 of the second auxiliary valve acting on the valve core 1221 of the second auxiliary valve, the valve core 1221 of the second auxiliary valve may move towards the inner cavity 1226 of the second auxiliary valve and compress the elastic member 1222 of the second auxiliary valve under the opening force. In this case, the valve core 1221 of the second auxiliary valve and the lower part of the second auxiliary valve cavity 1220 may be gradually separated to form a second auxiliary valve channel, the hydraulic fluid entering the outer cavity 1224 of the second auxiliary valve may flow to the side cavity 1225 of the second auxiliary valve through the second auxiliary valve channel, and finally the hydraulic fluid may enter the rodless cavity 211 through the first hydraulic fluid channel 131.

It should be noted that, in an operating process that the hydraulic fluid in the rod cavity 212 enters the rodless cavity 211 through the second auxiliary valve 122 of the second damping valve 12 under the action of the hydraulic cylinder 2 performing the stretching motion, since the flow of the hydraulic fluid flowing through the hydraulic fluid hole 1223 of the second auxiliary valve is controlled by the flow cross-sectional area of the second main valve channel, the pressure drop of the hydraulic fluid flowing through the hydraulic fluid hole 1223 of the second auxiliary valve may also be controlled, and a pressure difference, in which the hydraulic fluid pressure in the outer cavity 1224 of the second auxiliary valve is greater than that in the inner cavity 1226 of the second auxiliary valve, may also be controlled. Therefore, the opening force of the valve core 1221 of the second auxiliary valve moving towards the inner cavity 1226 of the second auxiliary valve may also be controlled, so that the operating process of the second auxiliary valve 122 may also be controlled. In other words, a flow pressure characteristic of the hydraulic fluid flowing from the outer cavity 1224 of the second auxiliary valve to the side cavity 1225 of the second auxiliary valve through the second auxiliary valve channel may be controlled by the second main valve 121.

It should be noted that by increasing the flow cross-sectional area of the hydraulic fluid hole 1223 of the second auxiliary valve, the pressure drop generated when the hydraulic fluid flows through the hydraulic fluid hole 1223 of the second auxiliary valve may be decreased. Therefore, the pressure difference, in which the hydraulic fluid pressure in the outer cavity 1224 of the second auxiliary valve is greater than that in the inner cavity 1226 of the second auxiliary valve, may also be decreased, and the opening force of the valve core 1221 of the second auxiliary valve moving towards the inner cavity 1226 of the second auxiliary valve may also be decreased. When the flow cross-sectional area of the hydraulic fluid hole 1223 of the second auxiliary valve increases to a certain extent, the opening force of the valve core 1221 of the second auxiliary valve moving towards the inner cavity 1226 of the second auxiliary valve may be always less than the elastic force that is applied to the valve core 1221 of the second auxiliary valve by the elastic member 1222 of the second auxiliary valve, i.e., the second auxiliary valve 122 may always remain the closed state and be uncontrolled by the second main valve 121.

In a process that the foregoing hydraulic cylinder 2 performs the stretching motion, a drop of a hydraulic fluid discharge level in the liquid reservoir 3 may increase a space of the gas storage cavity 302. In this case, a pressure of the high-pressure gas in the gas storage cavity 302 may be decreased, gas internal energy may be converted into mechanical energy of the hydraulic cylinder 2 for performing the stretching motion, the hydraulic fluid pressure in the hydraulic fluid circuit in communication with the liquid reservoir 3 may also be decreased, and a stretching force for the hydraulic cylinder 2 performing the stretching motion, which is generated by the hydraulic fluid pressure acting on the piston operating cross section of the connecting rod and piston component 201, may also be decreased. When the stretching force of the hydraulic cylinder 2 decreases to be balanced with an external compression force acting on the hydraulic cylinder 2, the hydraulic cylinder 2 may stop the stretching motion, and the hydro-pneumatic spring device may be in a static balance position.

When the hydraulic cylinder 2 performs the compression motion due to an external force, referring to FIG. 1, FIG. 2, and FIG. 5, a flow path of the hydraulic fluid may be shown in broken lines m1 and m2, and an operating process of the second damping valve 12 may be as follows.

Firstly, the hydraulic cylinder 2 may perform the compression motion, so that a volume of the rod cavity 212 may be increased to collect and store the hydraulic fluid, and a volume of the rodless cavity 211 may be decreased, so that the hydraulic fluid inside the rodless cavity 211 may enter the rear cavity 1215 of the second main valve and the side cavity 1225 of the second auxiliary valve of the second damping valve 12 through the first hydraulic fluid channel 131.

Since the second main valve 121 and the second auxiliary valve 122 of the second damping valve 12 are in a normal closed state at the initial time, the hydraulic fluid entering from the first hydraulic fluid channel 131 cannot flow into the inner cavity 1226 of the second auxiliary valve. However, the hydraulic fluid in the inner cavity 1226 of the second auxiliary valve may flow out from the hydraulic fluid hole 1223 of the second auxiliary valve. Therefore, when the flow and the pressure of the hydraulic fluid entering from the first hydraulic fluid channel 131 gradually increase, the hydraulic fluid pressure in the side cavity 1225 of the second auxiliary valve may be gradually greater than that in the inner cavity 1226 of the second auxiliary valve, thereby generating a pressure difference. The valve core 1221 of the second auxiliary valve may generate an opening force to allow the valve core 1221 of the second auxiliary valve to move towards the inner cavity 1226 of the second auxiliary valve under the action of the pressure difference, and the opening force may increase gradually as the pressure difference increases gradually.

When the opening force is less than or equal to an elastic force of the elastic member 1222 of the second auxiliary valve acting on the valve core 1221 of the second auxiliary valve, the valve core 1221 of the second auxiliary valve may remain abutting against the lower part of the second auxiliary valve cavity 1220 under the elastic force of the elastic member 1222 of the second auxiliary valve, and the hydraulic fluid entering the side cavity 1225 of the second auxiliary valve cannot flow to the outer cavity 1224 of the second auxiliary valve, and the second auxiliary valve 122 may remain in a closed state.

It should be noted that when an abutment between the valve core 1221 of the second auxiliary valve and the lower part of the second auxiliary valve cavity 1220 is designed as a non-sealing structure, the hydraulic fluid entering the side cavity 1225 of the second auxiliary valve may flow to the outer cavity 1224 of the second auxiliary valve by a preset slit at the abutment after the valve core 1221 of the second auxiliary valve abuts against the lower part of the second auxiliary valve cavity 1220, and/or by a preset small hole or groove on the valve core 1221 of the second auxiliary valve or the lower part of the second auxiliary valve cavity 1220, and the second auxiliary valve 122 may be in a throttling state.

When the opening force is greater than the elastic force of the elastic member 1222 of the second auxiliary valve acting on the valve core 1221 of the second auxiliary valve, the valve core 1221 of the second auxiliary valve may move towards the inner cavity 1226 of the second auxiliary valve and compress the elastic member 1222 of the second auxiliary valve under the opening force. In this case, the valve core 1221 of the second auxiliary valve and the lower part of the second auxiliary valve cavity 1220 may be gradually separated to form a second auxiliary valve channel, the hydraulic fluid entering the side cavity 1225 of the second auxiliary valve may flow to the outer cavity 1224 of the second auxiliary valve through the second auxiliary valve channel, and the second auxiliary valve 122 may be in an overflow state. When the valve core 1221 of the second auxiliary valve stops moving after moving towards the inner cavity 1226 of the second auxiliary valve to a preset position under the opening force, the second auxiliary valve 122 may be in the throttling state again.

Finally, the hydraulic fluid in the outer cavity 1224 of the second auxiliary valve may enter the rod cavity 212 of the hydraulic cylinder 2 through the second hydraulic fluid channel 132.

It should be noted that the elastic member 1222 of the second auxiliary valve acts on the valve core 1221 of the second auxiliary valve with a relatively small elastic force, which may be overcome by a very small opening force. That is, a very small pressure difference may cause the second auxiliary valve 122 to be in the overflow state. Therefore, when the hydraulic fluid flows from the side cavity 1225 of the second auxiliary valve to the outer cavity 1224 of the second auxiliary valve, a small pressure drop that is not related to a flow may be generated between the side cavity 1225 of the second auxiliary valve and the outer cavity 1224 of the second auxiliary valve. In other words, in an operating process that the hydraulic fluid in the rodless cavity 211 enters the rod cavity 212 through the second damping valve 12 under the action of the hydraulic cylinder 2 performing the compression motion, the second damping valve 12 may not cause the hydraulic cylinder 2 to generate a compression motion damping force related to a compression motion speed.

Referring to FIG. 1, FIG. 2, and FIG. 5, the flow path of the hydraulic fluid may be shown in broken lines m1 to m3, and an operating process of the first damping valve 11 may be as follows.

Since the connecting rod of the connecting rod and piston component 201 is disposed in the rod cavity 212 of the hydraulic cylinder 2, the piston operating cross-sectional area at the side of the rodless cavity 211 may be greater than that at the side of the rod cavity 212. When the hydraulic cylinder 2 performs the compression motion, a decreased volume of the rodless cavity 211 may be greater than an increased volume of the rod cavity 212. Therefore, when the rod cavity 212 is filled with the hydraulic fluid discharged from the rodless cavity 211, a part of the hydraulic fluid may be discharged. Referring to FIG. 1 and FIG. 5, the discharged hydraulic fluid may enter the outer cavity 1124 of the first auxiliary valve through the first hydraulic fluid channel 131, and then enter the inner cavity 1126 of the first auxiliary valve and the front cavity 1114 of the first main valve through the hydraulic fluid hole 1123 of the first auxiliary valve. Alternatively, referring to FIG. 2, the discharged hydraulic fluid may enter the outer cavity 1124 of the first auxiliary valve through the first hydraulic fluid channel 131, while entering the inner cavity 1126 of the first auxiliary valve and the front cavity 1114 of the first main valve through the hydraulic fluid hole 1123 of the first auxiliary valve.

Since the first main valve 111 of the first damping valve 11 is in a normal closed state at the initial time, the hydraulic fluid entering the front cavity 1114 of the first main valve cannot flow to the rear cavity 1115 of the first main valve. When the flow and the pressure of the hydraulic fluid entering from the first hydraulic fluid channel 131 gradually increase, the hydraulic fluid pressure in the front cavity 1114 of the first main valve may also be gradually greater than that in the rear cavity 1115 of the first main valve, thereby generating a pressure difference. The valve core 1111 of the first main valve may generate an opening force to allow the valve core 1111 of the first main valve to move towards a regulating rod 1113 of the first main valve under the action of the pressure difference, and the opening force may increase gradually as the pressure difference increases gradually.

When the opening force is greater than an elastic force of the elastic member 1112 of the first main valve acting on the valve core 1111 of the first main valve, the valve core 1111 of the first main valve may move towards the regulating rod 1113 of the first main valve and compress the elastic member 1112 of the first main valve under the opening force. In this case, the valve core 1111 of the first main valve and the front part of the first main valve cavity 1110 may be gradually separated to form a first main valve channel, the hydraulic fluid entering the front cavity 1114 of the first main valve may flow to the rear cavity 1115 of the first main valve through the first main valve channel, and then the hydraulic fluid may enter the liquid reservoir 3 through the third hydraulic fluid channel 133.

Since the hydraulic fluid flowing from the front cavity 1114 of the first main valve to the rear cavity 1115 of the first main valve generates a pressure drop when flowing through the first main valve channel, when the flow and the pressure of the hydraulic fluid flowing through the first main valve channel continuously increase, a hydraulic fluid pressure difference, in which the hydraulic fluid pressure in the front cavity 1114 of the first main valve is greater than that in the rear cavity 1115 of the first main valve, may also continuously increase, and the opening force may also continuously increase. Firstly, the valve core 1111 of the first main valve may continue to move towards the regulating rod 1113 of the first main valve and compress the elastic member 1112 of the first main valve under the continuously increasing opening force, i.e., a flow cross-sectional area of the first main valve channel may gradually increase, and the first main valve 111 may be in the overflow state. Then, when the valve core 1111 of the first main valve moves to abut against the regulating rod 1113 of the first main valve, and the opening force is less than or equal to a position retaining force of the regulating rod 1113 of the first main valve, the valve core 1111 of the first main valve may be maintained in a position regulated by the regulating rod 1113 of the first main valve under the action of the regulating rod 1113 of the first main valve, i.e., the flow cross-sectional area of the first main valve channel may be maintained in a value regulated by the regulating rod 1113 of the first main valve, and the first main valve 111 may be in the throttling state. Then, when the opening force is greater than the position retaining force of the regulating rod 1113 of the first main valve, the valve core 1111 of the first main valve may push the regulating rod 1113 of the first main valve to continue to move together along a direction of the regulating rod 1113 of the first main valve under the action of the opening force, i.e., the flow cross-sectional area of the first main valve channel may be increased gradually again, and the first main valve 111 may be in the overflow state again.

It should be noted that the regulating rod 1113 of the first main valve may move up and down along an axial direction by electronic control to adjust an axial position of the regulating rod 1113 of the first main valve, so as to adjust a circulation characteristic (a flow-pressure curve) of the first main valve 111. The regulating rod 1113 of the first main valve may be disposed in a self-locking structure or a non-self-locking structure. For the self-locking structure, specifically, when an external force is applied to the regulating rod 1113 of the first main valve along the axial direction, the regulating rod 1113 of the first main valve cannot move along an applied force direction, and can remain in an adjusted position, i.e., the regulating rod 1113 of the first main valve may not move as the opening force applied to the valve core 1111 of the first main valve increases. For the non-self-locking structure, specifically, the regulating rod 1113 of the first main valve may further be set the position retaining force of the regulating rod 1113 of the first main valve along the axial direction by electrical control or a preset force value. When the external force applied to the regulating rod 1113 of the first main valve along the axial direction is less than or equal to the preset position retaining force, the regulating rod 1113 of the first main valve may be maintained in an adjusted axial position. When the external force applied to the regulating rod 1113 of the first main valve along the axial direction is greater than the preset position retaining force, the regulating rod 1113 of the first main valve may move along the applied force direction, i.e., the regulating rod 1113 of the first main valve may move as the opening force applied to the valve core 1111 of the first main valve increases, and a circulation characteristic of the first main valve 111 may further be adjusted by changing the position retaining force.

It should be noted that, in an operating process that the hydraulic fluid in the rodless cavity 211 enters the liquid reservoir 3 through the first main valve 111 of the first damping valve 11 under the action of the hydraulic cylinder 2 performing the compression motion, the first main valve 111 can independently be in operation and can implement multi-stage multi-state control of the compression motion damping force according to speed change of the compression motion of the hydraulic cylinder 2. During implementation, when a speed of the compression motion of the hydraulic cylinder 2 changes, a flow of the hydraulic fluid flowing through the first main valve 111 may also change, and the pressure drop generated when the hydraulic fluid flows through the first main valve 111 may also change. In addition, the first main valve 111 may be in an operating state corresponding to the flow and the pressure, for example, when the flow and the pressure reach certain regulation interval values or preset interval values, the first main valve 111 may be in the overflow state or the throttle state at a stage corresponding to the first main valve 111, and the circulation characteristic of the first main valve 111 may approach a required ideal curve after multi-stage multi-state control. In each stage of the second main valve 121, the operating state of the first main valve 111 may form a backpressure corresponding to a hydraulic fluid circuit at a side of the rodless cavity 211, and a piston operating cross section at the side of the rodless cavity 211 may generate a corresponding force under the action of the backpressure, i.e., the hydraulic cylinder 2 may generate the corresponding compression motion damping force at each speed interval during the compression motion. In other words, when the hydraulic cylinder 2 performs the compression motion, the first main valve 111 of the first damping valve 11 can enable the hydraulic cylinder 2 to generate the compression motion damping force corresponding to a compression motion speed, and can adjust the circulation characteristic of the first main valve 111 in a preset and electronic control manner, so as to control a motion damping force characteristic (a motion speed-damping force curve) of the hydraulic cylinder 2 during the compression motion to approach the required ideal curve.

After the first main valve channel of the first damping valve 11 is formed, referring to FIG. 1 and FIG. 5, the hydraulic fluid entering the first hydraulic fluid channel 131 may successively pass through the outer cavity 1124 of the first auxiliary valve, the hydraulic fluid hole 1123 of the first auxiliary valve, the inner cavity 1126 of the first auxiliary valve, and the front cavity 1114 of the first main valve, and may flow out through the first main valve channel. Alternatively, referring to FIG. 2, the hydraulic fluid entering from the first hydraulic fluid channel 131 may flow into the outer cavity 1124 of the first auxiliary valve, while passing through the hydraulic fluid hole 1123 of the first auxiliary valve, the inner cavity 1126 of the first auxiliary valve, and the front cavity 1114 of the first main valve, and flowing out through the first main valve channel. Since the hydraulic fluid flowing from the first hydraulic fluid channel 131 to the inner cavity 1126 of the first auxiliary valve generates a pressure drop when flowing through the hydraulic fluid hole 1123 of the first auxiliary valve, the hydraulic fluid pressure in the outer cavity 1124 of the first auxiliary valve may be greater than that in the inner cavity 1126 of the first auxiliary valve, thereby generating a pressure difference. The valve core 1121 of the first auxiliary valve may generate an opening force to allow the valve core 1121 of the first auxiliary valve to move towards the inner cavity 1126 of the first auxiliary valve under the action of the pressure difference. As the flow and the pressure of the hydraulic fluid that flows through the hydraulic fluid hole 1123 of the first auxiliary valve continuously increase, the pressure difference may also continuously increase, and the opening force may also continuously increase.

Since the first auxiliary valve 112 of the first damping valve 11 is in a normal closed state at the initial time, when the opening force is less than or equal to an elastic force that is applied to the valve core 1121 of the first auxiliary valve by the elastic member 1122 of the first auxiliary valve, the valve core 1121 of the first auxiliary valve may remain abutting against the lower part of the first auxiliary valve cavity 1120 under the elastic force of the elastic member 1122 of the first auxiliary valve, and the hydraulic fluid entering the outer cavity 1124 of the first auxiliary valve cannot flow to the side cavity 1125 of the first auxiliary valve, and the first auxiliary valve 112 may remain in a closed state.

It should be noted that when an abutment between the valve core 1121 of the first auxiliary valve and the lower part of the first auxiliary valve cavity 1120 is designed as a non-sealing structure, the hydraulic fluid entering the outer cavity 1124 of the first auxiliary valve may flow to the side cavity 1125 of the first auxiliary valve by a preset slit at the abutment after the valve core 1121 of the first auxiliary valve abuts against the lower part of the first auxiliary valve cavity 1120, and/or by a preset small hole or groove on the valve core 1121 of the first auxiliary valve or the lower part of the first auxiliary valve cavity 1120, and the first auxiliary valve 112 may be in a throttling state.

When the opening force is greater than the elastic force of the elastic member 1122 of the first auxiliary valve acting on the valve core 1121 of the first auxiliary valve, the valve core 1121 of the first auxiliary valve may move towards the inner cavity 1126 of the first auxiliary valve and compress the elastic member 1122 of the first auxiliary valve under the opening force. In this case, the valve core 1121 of the first auxiliary valve and the lower part of the first auxiliary valve cavity 1120 may be gradually separated to form a first auxiliary valve channel, the hydraulic fluid entering the outer cavity 1124 of the first auxiliary valve may flow to the side cavity 1125 of the first auxiliary valve through the first auxiliary valve channel, and finally the hydraulic fluid may enter the liquid reservoir 3 through the third hydraulic fluid channel 133.

It should be noted that, in an operating process that the hydraulic fluid in the rodless cavity 211 enters the liquid reservoir 3 through the first auxiliary valve 112 of the first damping valve 12 under the action of the hydraulic cylinder 2 performing the compression motion, since the flow of the hydraulic fluid flowing through the hydraulic fluid hole 1123 of the first auxiliary valve is controlled by the flow cross-sectional area of the first main valve channel, the pressure drop of the hydraulic fluid flowing through the hydraulic fluid hole 1123 of the first auxiliary valve may also be controlled, and a pressure difference, in which the hydraulic fluid pressure in the outer cavity 1124 of the first auxiliary valve is greater than that in the inner cavity 1126 of the first auxiliary valve, may also be controlled. Therefore, the opening force of the valve core 1121 of the first auxiliary valve moving towards the inner cavity 1126 of the first auxiliary valve may also be controlled, so that the operating process of the first auxiliary valve 112 may also be controlled. In other words, a flow pressure characteristic of the hydraulic fluid flowing from the outer cavity 1124 of the first auxiliary valve to the side cavity 1125 of the first auxiliary valve through the first auxiliary valve channel may be controlled by the first main valve 111.

It should be noted that by increasing the flow cross-sectional area of the hydraulic fluid hole 1123 of the first auxiliary valve, the pressure drop generated when the hydraulic fluid flows through the hydraulic fluid hole 1123 of the first auxiliary valve may be decreased. Therefore, the pressure difference, in which the hydraulic fluid pressure in the outer cavity 1124 of the first auxiliary valve is greater than that in the inner cavity 1126 of the first auxiliary valve, may also be decreased, and the opening force of the valve core 1121 of the first auxiliary valve moving towards the inner cavity 1126 of the first auxiliary valve may also be decreased. When the flow cross-sectional area of the hydraulic fluid hole 1123 of the first auxiliary valve increases to a certain extent, the opening force of the valve core 1121 of the first auxiliary valve moving towards the inner cavity 1126 of the first auxiliary valve may be always less than the elastic force that is applied to the valve core 1121 of the first auxiliary valve by the elastic member 1122 of the first auxiliary valve, i.e., the first auxiliary valve 112 may always remain the closed state and be uncontrolled by the first main valve 111.

In a process that the foregoing hydraulic cylinder 2 performs the compression motion, an increase of a hydraulic fluid charge level in the liquid reservoir 3 may decrease a space of the gas storage cavity 302. In this case, a pressure of the high-pressure gas in the gas storage cavity 302 may be increased, mechanical energy of the hydraulic cylinder 2 for performing the stretching motion may be converted into gas internal energy, the hydraulic fluid pressure in the hydraulic fluid circuit in communication with the liquid reservoir 3 may also be increased, and a stretching force for the hydraulic cylinder 2 performing the stretching motion, which is generated by the hydraulic fluid pressure acting on the piston operating cross section of the connecting rod and piston component 201, may also be increased. When the stretching force of the hydraulic cylinder 2 increases to be balanced with an external compression force acting on the hydraulic cylinder 2, the hydraulic cylinder 2 may stop the compression motion, and then enter a next operating period.

The liquid reservoir 3 may be provided with either or both of a liquid charging and discharging interface 312 and a gas charging and discharging interface 311, the liquid charging and discharging interface 312 is configured to allow the hydraulic fluid in the liquid reservoir 3 to be replenished and discharged. The gas charging and discharging interface 311 is configured to allow the high-pressure gas in the liquid reservoir 3 to be replenished and discharged.

It may adjust the static balance position of the hydro-pneumatic spring device by replenishing or discharging the hydraulic fluid in the liquid reservoir 3, i.e., an initial position of the connecting rod and piston component 201 of the hydraulic cylinder 2 on the cylinder barrel component 200 can be adjusted. It may change rigidity and the static balance position of the hydro-pneumatic spring device by replenishing or discharging the high-pressure gas in the liquid reservoir 3. It may adjust rigidity, a body height, and a posture of a vehicle suspension system by replenishing or discharging the high-pressure gas and the hydraulic fluid in the liquid reservoir 3.

A gas-liquid spacing device 301 may be mounted in the liquid reservoir 3, and the liquid reservoir 3 is capable of being divided into a liquid storage cavity 303 and a gas storage cavity 302 by the gas-liquid spacing device 301. The gas-liquid spacing device 301 can ensure separation between the hydraulic fluid and the gas in the liquid reservoir 3, so as to prevent foaming of the hydraulic fluid in the liquid storage cavity 303. Exemplarily, the gas-liquid spacing device 301 may be disposed as a piston or a skin. The gas-liquid spacing device 301 may perform axial movement (e.g., a floating piston) or expansion and contraction (e.g., a skin or a diaphragm) with an increase or decrease of the hydraulic fluid in the liquid storage cavity 303, and always keep in contact with the liquid level under the action of the high-pressure gas in the gas storage cavity 302.

### The second embodiment

Referring to FIG. 3, FIG. 4, and FIG. 6, a difference between the second embodiment and the first embodiment lies in that, by changing cavities in communication with the hydraulic fluid hole 1123 of the first auxiliary valve and the hydraulic fluid hole 1223 of the second auxiliary valve, the third hydraulic fluid channel 133 can be in communication with the rod cavity 212, and the second hydraulic fluid channel 132 can be in communication with the liquid reservoir 3, so as to adapt to different assembly directions. In the second embodiment, the hydraulic fluid hole 1123 of the first auxiliary valve is configured to be in communication with the side cavity 1125 of the first auxiliary valve and the inner cavity 1126 of the first auxiliary valve, the hydraulic fluid hole 1223 of the second auxiliary valve is configured to be in communication with the side cavity 1225 of the second auxiliary valve and the inner cavity 1226 of the second auxiliary valve, the first hydraulic fluid channel 131 may be in communication with the outer cavity 1124 of the first auxiliary valve, the side cavity 1125 of the first auxiliary valve, and the rear cavity 1115 of the first main valve, respectively, the second hydraulic fluid channel 131 may be in communication with the rear cavity 1215 of the second main valve, the outer cavity 1224 of the second auxiliary valve, and the liquid reservoir 3, respectively, and the third hydraulic fluid channel 133 may be in communication with the side cavity 1125 of the first auxiliary valve and the rod cavity 212,respectively.

When a stretching force of the hydraulic cylinder 2 is greater than a compression force applied to the hydraulic cylinder 2 from the outside, or, the hydraulic cylinder 2 performs the stretching motion due to an external force, referring to FIG. 3, FIG. 4, and FIG. 6, a flow path of the hydraulic fluid may be shown in broken lines n2 to n1, and an operating process of the second damping valve 12 may be as follows.

Firstly, the hydraulic fluid in the liquid reservoir 3 may enter the rear cavity 1215 of the second main valve and the outer cavity 1224 of the second auxiliary valve of the second damping valve 12 through the second hydraulic fluid channel 132 under the action of a high-pressure gas in the gas storage cavity 302.

Since the second main valve 121 and the second auxiliary valve 122 of the second damping valve 12 are in a normal closed state at the initial time, the hydraulic fluid entering from the second hydraulic fluid channel 132 cannot flow into the inner cavity 1226 of the second auxiliary valve. However, the hydraulic fluid in the inner cavity 1226 of the second auxiliary valve may flow out from the hydraulic fluid hole 1223 of the second auxiliary valve. Therefore, when the flow and the pressure of the hydraulic fluid entering from the second hydraulic fluid channel 132 gradually increase, the hydraulic fluid pressure in the outer cavity 1224 of the second auxiliary valve may be gradually greater than that in the inner cavity 1226 of the second auxiliary valve, thereby generating a pressure difference. The valve core 1221 of the second auxiliary valve may generate an opening force to allow the valve core 1221 of the second auxiliary valve to move towards the inner cavity 1226 of the second auxiliary valve under the action of the pressure difference, and the opening force may increase gradually as the pressure difference increases gradually.

When the opening force is less than or equal to an elastic force of the elastic member 1222 of the second auxiliary valve acting on the valve core 1221 of the second auxiliary valve, the valve core 1221 of the second auxiliary valve may remain abutting against the lower part of the second auxiliary valve cavity 1220 under the elastic force of the elastic member 1222 of the second auxiliary valve, and the hydraulic fluid entering the outer cavity 1224 of the second auxiliary valve cannot flow to the side cavity 1225 of the second auxiliary valve, and the second auxiliary valve 122 may remain in a closed state.

It should be noted that when an abutment between the valve core 1221 of the second auxiliary valve and the lower part of the second auxiliary valve cavity 1220 is designed as a non-sealing structure, the hydraulic fluid entering the outer cavity 1224 of the second auxiliary valve may flow to the side cavity 1225 of the second auxiliary valve by a preset slit at the abutment after the valve core 1221 of the second auxiliary valve abuts against the lower part of the second auxiliary valve cavity 1220, and/or by a preset small hole or groove on the valve core 1221 of the second auxiliary valve or the lower part of the second auxiliary valve cavity 1220, and the second auxiliary valve 122 may be in a throttling state.

When the opening force is greater than the elastic force of the elastic member 1222 of the second auxiliary valve acting on the valve core 1221 of the second auxiliary valve, the valve core 1221 of the second auxiliary valve may move towards the inner cavity 1226 of the second auxiliary valve and compress the elastic member 1222 of the second auxiliary valve under the opening force. In this case, the valve core 1221 of the second auxiliary valve and the lower part of the second auxiliary valve cavity 1220 may be gradually separated to form a second auxiliary valve channel, the hydraulic fluid entering the outer cavity 1224 of the second auxiliary valve may flow to the side cavity 1225 of the second auxiliary valve through the second auxiliary valve channel, and the second auxiliary valve 122 may be in an overflow state. When the valve core 1221 of the second auxiliary valve stops moving after moving towards the inner cavity 1226 of the second auxiliary valve to a preset position under the opening force, the second auxiliary valve 122 may be in the throttling state again.

Finally, the hydraulic fluid in the side cavity 1225 of the second auxiliary valve may enter the rodless cavity 211 of the hydraulic cylinder 2 through the first hydraulic fluid channel 131.

Since the connecting rod of the connecting rod and piston component 201 is disposed in the rod cavity 212 of the hydraulic cylinder 2, the piston operating cross-sectional area at the side of the rodless cavity 211 may be greater than that at the side of the rod cavity 212. Therefore, the connecting rod and piston component 201 may move towards the rod cavity 212 due to the hydraulic fluid entering the rod cavity 211 and the hydraulic fluid pressure, i.e., the hydraulic cylinder 2 may perform stretching motion.

It should be noted that the elastic member 1222 of the second auxiliary valve acts on the valve core 1221 of the second auxiliary valve with a relatively small elastic force, which may be overcome by a very small opening force. That is, a very small pressure difference may cause the second auxiliary valve 122 to be in the overflow state. Therefore, when the hydraulic fluid flows from the outer cavity 1224 of the second auxiliary valve to the side cavity 1225 of the second auxiliary valve, a small pressure drop that is not related to a flow may be generated between the outer cavity 1224 of the second auxiliary valve and the side cavity 1225 of the second auxiliary valve. In other words, the hydraulic fluid in the liquid reservoir 3 may flow through the second damping valve 12 under the high-pressure gas in the gas storage cavity 302 to enter the rodless cavity 211, so that the hydraulic cylinder 2 may perform the stretching motion. In this process, the second damping valve 12 may not cause the hydraulic cylinder 2 to generate a stretching motion damping force related to a stretching motion speed.

Referring to FIG. 3, FIG. 4, and FIG. 6, the flow path of the hydraulic fluid may be shown in broken lines n3 to n1, and an operating process of the first damping valve 11 may be as follows.

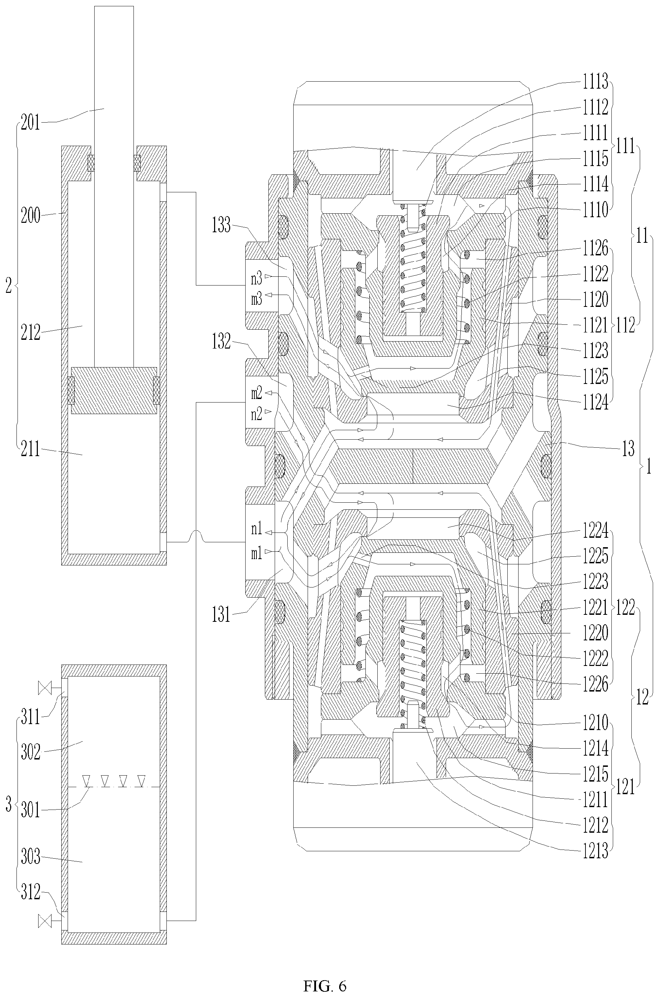

The stretching motion of the hydraulic cylinder 2 may increase the volume of the rodless cavity 211 to collect and store the hydraulic fluid, so that the volume of the rod cavity 212 may be decreased to discharge the hydraulic fluid. Referring to FIG. 3 and FIG. 6, the discharged hydraulic fluid may enter the side cavity 1125 of the first auxiliary valve through the third hydraulic fluid channel 133, and then enter the inner cavity 1126 of the first auxiliary valve and the front cavity 1114 of the first main valve through the hydraulic fluid hole 1123 of the first auxiliary valve. Alternatively, referring to FIG. 4, the discharged hydraulic fluid may enter the side cavity 1125 of the first auxiliary valve through the third hydraulic fluid channel 133, while entering the inner cavity 1126 of the first auxiliary valve and the front cavity 1114 of the first main valve through the hydraulic fluid hole 1123 of the first auxiliary valve.

Since the first main valve 111 of the first damping valve 11 is in a normal closed state at the initial time, the hydraulic fluid entering the front cavity 1114 of the first main valve cannot flow to the rear cavity 1115 of the first main valve. When the flow and the pressure of the hydraulic fluid entering from the third hydraulic fluid channel 133 gradually increase, the hydraulic fluid pressure in the front cavity 1114 of the first main valve may also be gradually greater than that in the rear cavity 1115 of the first main valve, thereby generating a pressure difference. The valve core 1111 of the first main valve may generate an opening force to allow the valve core 1111 of the first main valve to move towards a regulating rod 1113 of the first main valve under the action of the pressure difference, and the opening force may increase gradually as the pressure difference increases gradually.

When the opening force is greater than an elastic force of the elastic member 1112 of the first main valve acting on the valve core 1111 of the first main valve, the valve core 1111 of the first main valve may move towards the regulating rod 1113 of the first main valve and compress the elastic member 1112 of the first main valve under the opening force. In this case, the valve core 111 of the first main valve and the front part of the first main valve cavity 1110 may be gradually separated to form a first main valve channel, the hydraulic fluid entering the front cavity 1114 of the first main valve may flow to the rear cavity 1115 of the first valve through the first main valve channel, and then the hydraulic fluid may enter the rodless cavity 211 through the first hydraulic fluid channel 131.

Since the hydraulic fluid flowing from the front cavity 1114 of the first main valve to the rear cavity 1115 of the first main valve generates a pressure drop when flowing through the first main valve channel, when the flow and the pressure of the hydraulic fluid flowing through the first main valve channel continuously increase, a hydraulic fluid pressure difference, in which the hydraulic fluid pressure in the front cavity 1114 of the first main valve is greater than that in the rear cavity 1115 of the first main valve, may also continuously increase, and the opening force may also continuously increase. Firstly, the valve core 1111 of the first valve may continue to move towards the regulating rod 1113 of the first main valve and compress the elastic member 1112 of the first main valve under the continuously increasing opening force, i.e., a flow cross-sectional area of the first main valve channel may gradually increase, and the first main valve 111 may be in the overflow state. Then, when the valve core 1111 of the first main valve moves to abut against the regulating rod 1113 of the first main valve, and the opening force is less than or equal to a position retaining force of the regulating rod 1113 of the first main valve, the valve core 1111 of the first main valve may be maintained in a position regulated by the regulating rod 1113 of the first main valve under the action of the regulating rod 1113 of the first main valve, i.e., the flow cross-sectional area of the first main valve channel may be maintained in a value regulated by the regulating rod 1113 of the first main valve, and the first main valve 111 may be in the throttling state. Then, when the opening force is greater than the position retaining force of the regulating rod 1113 of the first main valve, the valve core 1111 of the first main valve may push the regulating rod 1113 of the first main valve to continue to move together along a direction of the regulating rod 1113 of the first main valve under the action of the opening force, i.e., the flow cross-sectional area of the first main valve channel may be increased gradually again, and the first main valve 111 may be in the overflow state again.

It should be noted that the regulating rod 1113 of the first main valve may move up and down along an axial direction by electronic control to adjust an axial position of the regulating rod 1113 of the first main valve, so as to adjust a circulation characteristic (a flow-pressure curve) of the first main valve 111. The regulating rod 1113 of the first main valve may be disposed in a self-locking structure or a non-self-locking structure. For the self-locking structure, specifically, when an external force is applied to the regulating rod 1113 of the first main valve along the axial direction, the regulating rod 1113 of the first main valve cannot move along an applied force direction, and can remain in an adjusted position, i.e., the regulating rod 1113 of the first main valve may not move as the opening force applied to the valve core 1111 of the first valve increases. For the non-self-locking structure, specifically, the regulating rod 1113 of the first main valve may further be set the position retaining force of the regulating rod 1113 of the first main valve along the axial direction by electrical control or a preset force value. When the external force applied to the regulating rod 1113 of the first main valve along the axial direction is less than or equal to the preset position retaining force, the regulating rod 1113 of the first main valve may be maintained in an adjusted axial position. When the external force applied to the regulating rod 1113 of the first main valve along the axial direction is greater than the preset position retaining force, the regulating rod 1113 of the first main valve may move along the applied force direction, i.e., the regulating rod 1113 of the first main valve may move as the opening force applied to the valve core 1111 of the first main valve increases, and a circulation characteristic of the first main valve 111 may further be adjusted by changing the position retaining force.

It should be noted that, in an operating process that the hydraulic fluid in the rod cavity 212 enters the rodless cavity 211 through the first main valve 111 of the first damping valve 11 under the action of the hydraulic cylinder 2 performing the stretching motion, the first main valve 111 can independently be in operation and can implement multi-stage multi-state control of the stretching motion damping force according to speed change of the stretching motion of the hydraulic cylinder 2. During implementation, when a speed of the stretching motion of the hydraulic cylinder 2 changes, a flow of the hydraulic fluid flowing through the first main valve 111 may also change, and the pressure drop generated when the hydraulic fluid flows through the first main valve 111 may also change. In addition, the first main valve 111 may be in an operating state corresponding to the flow and the pressure, for example, when the flow and the pressure reach certain regulation interval values or preset interval values, the first main valve 111 may be in the overflow state or the throttle state at a stage corresponding to the first main valve 111, and the circulation characteristic of the first main valve 111 may approach a required ideal curve after multi-stage multi-state control. In each stage of the first main valve 111, the operating state of the first main valve 111 may form a backpressure corresponding to a hydraulic fluid circuit at a side of the rod cavity 212, and a piston operating cross section at the side of the rod cavity 212 may generate a corresponding force under the action of the backpressure, i.e., the hydraulic cylinder 2 may generate the corresponding stretching motion damping force at each speed interval during the stretching motion. In other words, when the hydraulic cylinder 2 performs the stretching motion, the first main valve 111 of the first damping valve 11 can enable the hydraulic cylinder 2 to generate the stretching motion damping force corresponding to a stretching motion speed, and can adjust the circulation characteristic of the first main valve 111 in a preset and electronic control manner, so as to control a motion damping force characteristic (a motion speed-damping force curve) of the hydraulic cylinder 2 during the stretching motion to approach the required ideal curve.

After the first main valve channel of the first damping valve 11 is formed, referring to FIG. 3 and FIG. 4, the hydraulic fluid entering the third hydraulic fluid channel 133 may successively pass through the side cavity 1125 of the first auxiliary valve, the hydraulic fluid hole 1123 of the first auxiliary valve, the inner cavity 1126 of the first auxiliary valve, and the front cavity 1114 of the first main valve, and may flow out through the first main valve channel. Alternatively, referring to FIG. 6, the hydraulic fluid entering from the third hydraulic fluid channel 133 may flow into the side cavity 1125 of the first auxiliary valve, while passing through the hydraulic fluid hole 1123 of the first auxiliary valve, the inner cavity 1126 of the first auxiliary valve, and the front cavity 1114 of the first main valve, and flowing out through the first main valve channel. Since the hydraulic fluid flowing from the third hydraulic fluid channel 133 to the inner cavity 1126 of the first auxiliary valve generates a pressure drop when flowing through the hydraulic fluid hole 1123 of the first auxiliary valve, the hydraulic fluid pressure in the side cavity 1125 of the first auxiliary valve may be greater than that in the inner cavity 1126 of the first auxiliary valve, thereby generating a pressure difference. The valve core 1121 of the first auxiliary valve may generate an opening force to allow the valve core 1121 of the first auxiliary valve to move towards the inner cavity 1126 of the first auxiliary valve under the action of the pressure difference. As the flow and the pressure of the hydraulic fluid that flows through the hydraulic fluid hole 1123 of the first auxiliary valve continuously increase, the pressure difference may also continuously increase, and the opening force may also continuously increase.

Since the first auxiliary valve 112 of the first damping valve 11 is in a normal closed state at the initial time, when the opening force is less than or equal to an elastic force that is applied to the valve core 1121 of the first auxiliary valve by the elastic member 1122 of the first auxiliary valve, the valve core 1121 of the first auxiliary valve may remain abutting against the lower part of the first auxiliary valve cavity 1120 under the elastic force of the elastic member 1122 of the first auxiliary valve, and the hydraulic fluid entering the side cavity 1125 of the first auxiliary valve cannot flow to the outer cavity 1124 of the first auxiliary valve, and the first auxiliary valve 112 may remain in a closed state.

It should be noted that when an abutment between the valve core 1121 of the first auxiliary valve and the lower part of the first auxiliary valve cavity 1120 is designed as a non-sealing structure, the hydraulic fluid entering the side cavity 1125 of the first auxiliary valve may flow to the outer cavity 1124 of the first auxiliary valve by a preset slit at the abutment after the valve core 1121 of the first auxiliary valve abuts against the lower part of the first auxiliary valve cavity 1120, and/or by a preset small hole or groove on the valve core 1121 of the first auxiliary valve or the lower part of the first auxiliary valve cavity 1120, and the first auxiliary valve 112 may be in a throttling state.

When the opening force is greater than the elastic force of the elastic member 1122 of the first auxiliary valve acting on the valve core 1121 of the first auxiliary valve, the valve core 1121 of the first auxiliary valve may move towards the inner cavity 1126 of the first auxiliary valve and compress the elastic member 1122 of the first auxiliary valve under the opening force. In this case, the valve core 1121 of the first auxiliary valve and the lower part of the first auxiliary valve cavity 1120 may be gradually separated to form a first auxiliary valve channel, the hydraulic fluid entering the side cavity 1125 of the first auxiliary valve may flow to the outer cavity 1124 of the first auxiliary valve through the second auxiliary valve channel, and finally the hydraulic fluid may enter the rodless cavity 211 through the first hydraulic fluid channel 131.

It should be noted that, in an operating process that the hydraulic fluid in the rod cavity 212 enters the rodless cavity 211 through the first auxiliary valve 112 of the first damping valve 11 under the action of the hydraulic cylinder 2 performing the stretching motion, since the flow of the hydraulic fluid flowing through the hydraulic fluid hole 1123 of the first auxiliary valve is controlled by the flow cross-sectional area of the first main valve channel, the pressure drop of the hydraulic fluid flowing through the hydraulic fluid hole 1123 of the first auxiliary valve may also be controlled, and a pressure difference, in which the hydraulic fluid pressure in the side cavity 1125 of the first auxiliary valve is greater than that in the inner cavity 1126 of the first auxiliary valve, may also be controlled. Therefore, the opening force of the valve core 1121 of the first auxiliary valve moving towards the inner cavity 1126 of the first auxiliary valve may also be controlled, so that the operating process of the first auxiliary valve 112 may also be controlled. In other words, a flow pressure characteristic of the hydraulic fluid flowing from the side cavity 1125 of the first auxiliary valve to the outer cavity 1124 of the first auxiliary valve through the first auxiliary valve channel may be controlled by the first main valve 111.

It should be noted that by increasing the flow cross-sectional area of the hydraulic fluid hole 1123 of the first auxiliary valve, the pressure drop generated when the hydraulic fluid flows through the hydraulic fluid hole 1123 of the first auxiliary valve may be decreased. Therefore, the pressure difference, in which the hydraulic fluid pressure in the side cavity 1125 of the first auxiliary valve is greater than that in the inner cavity 1126 of the first auxiliary valve, may also be decreased, and the opening force of the valve core 1121 of the first auxiliary valve moving towards the inner cavity 1126 of the first auxiliary valve may also be decreased. When the flow cross-sectional area of the hydraulic fluid hole 1123 of the first auxiliary valve increases to a certain extent, the opening force of the valve core 1121 of the first auxiliary valve moving towards the inner cavity 1126 of the first auxiliary valve may be always less than the elastic force that is applied to the valve core 1121 of the first auxiliary valve by the elastic member 1122 of the first auxiliary valve, i.e., the first auxiliary valve 112 may always remain the closed state and be uncontrolled by the first main valve 111.

In a process that the foregoing hydraulic cylinder 2 performs the stretching motion, a drop of a hydraulic fluid discharge level in the liquid reservoir 3 may increase a space of the gas storage cavity 302. In this case, a pressure of the high-pressure gas in the gas storage cavity 302 may be decreased, gas internal energy may be converted into mechanical energy of the hydraulic cylinder 2 for performing the stretching motion, the hydraulic fluid pressure in the hydraulic fluid circuit in communication with the liquid reservoir 3 may also be decreased, and a stretching force for the hydraulic cylinder 2 performing the stretching motion, which is generated by the hydraulic fluid pressure acting on the piston operating cross section of the connecting rod and piston component 201, may also be decreased. When the stretching force of the hydraulic cylinder 2 decreases to be balanced with an external compression force acting on the hydraulic cylinder 2, the hydraulic cylinder 2 may stop the stretching motion, and the hydro-pneumatic spring device may be in a static balance position.

When the hydraulic cylinder 2 performs the compression motion due to an external force, referring to FIG. 3, FIG. 4, and FIG. 6, a flow path of the hydraulic fluid may be shown in broken lines m1 to m3, and an operating process of the first damping valve 11 may be as follows.

Firstly, the hydraulic cylinder 2 may perform the compression motion, so that a volume of the rod cavity 212 may be increased to collect and store the hydraulic fluid, and a volume of the rodless cavity 211 may be decreased, so that the hydraulic fluid inside the rodless cavity 211 may enter the rear cavity 1115 of the first main valve and the outer cavity 1124 of the first auxiliary valve of the first damping valve 11 through the first hydraulic fluid channel 131.

Since the first main valve 111 and the first auxiliary valve 112 of the first damping valve 11 are in a normal closed state at the initial time, the hydraulic fluid entering from the first hydraulic fluid channel 131 cannot flow into the inner cavity 1126 of the first auxiliary valve. However, the hydraulic fluid in the inner cavity 1126 of the first auxiliary valve may flow out from the hydraulic fluid hole 1123 of the first auxiliary valve. Therefore, when the flow and the pressure of the hydraulic fluid entering from the first hydraulic fluid channel 131 gradually increase, the hydraulic fluid pressure in the outer cavity 1124 of the first auxiliary valve may be gradually greater than that in the inner cavity 1126 of the first auxiliary valve, thereby generating a pressure difference. The valve core 1121 of the first auxiliary valve may generate an opening force to allow the valve core 1121 of the first auxiliary valve to move towards the inner cavity 1126 of the first auxiliary valve under the action of the pressure difference, and the opening force may increase gradually as the pressure difference increases gradually.

When the opening force is less than or equal to an elastic force of the elastic member 1122 of the first auxiliary valve acting on the valve core 1121 of the first auxiliary valve, the valve core 1121 of the first auxiliary valve may remain abutting against the lower part of the first auxiliary valve cavity 1120 under the elastic force of the elastic member 1122 of the first auxiliary valve, and the hydraulic fluid entering the outer cavity 1124 of the first auxiliary valve cannot flow to the side cavity 1125 of the first auxiliary valve, and the first auxiliary valve 112 may remain in a closed state.

It should be noted that when an abutment between the valve core 1121 of the first auxiliary valve and the lower part of the first auxiliary valve cavity 1120 is designed as a non-sealing structure, the hydraulic fluid entering the outer cavity 1124 of the first auxiliary valve may flow to the side cavity 1125 of the first auxiliary valve by a preset slit at the abutment after the valve core 1121 of the first auxiliary valve abuts against the lower part of the first auxiliary valve cavity 1120, and/or by a preset small hole or groove on the valve core 1121 of the first auxiliary valve or the lower part of the first auxiliary valve cavity 1120, and the first auxiliary valve 112 may be in a throttling state.

When the opening force is greater than the elastic force of the elastic member 1122 of the first auxiliary valve acting on the valve core 1121 of the first auxiliary valve, the valve core 1121 of the first auxiliary valve may move towards the inner cavity 1126 of the first auxiliary valve and compress the elastic member 1122 of the first auxiliary valve under the opening force. In this case, the valve core 1121 of the first auxiliary valve and the lower part of the first auxiliary valve cavity 1120 may be gradually separated to form a first auxiliary valve channel, the hydraulic fluid entering the outer cavity 1124 of the first auxiliary valve may flow to the side cavity 1125 of the first auxiliary valve through the first auxiliary valve channel, and the first auxiliary valve 112 may be in an overflow state. When the valve core 1121 of the first auxiliary valve stops moving after moving towards the inner cavity 1126 of the first auxiliary valve to a preset position under the opening force, the first auxiliary valve 112 may be in the throttling state again.

Finally, the hydraulic fluid in the side cavity 1125 of the first auxiliary valve may enter the rod cavity 212 of the hydraulic cylinder 2 through the third hydraulic fluid channel 133.

It should be noted that the elastic member 1122 of the first auxiliary valve acts on the valve core 1121 of the first auxiliary valve with a relatively small elastic force, which may be overcome by a very small opening force. That is, a very small pressure difference may cause the first auxiliary valve 112 to be in the overflow state. Therefore, when the hydraulic fluid flows from the outer cavity 1124 of the first auxiliary valve to the side cavity 1125 of the first auxiliary valve, a small pressure drop that is not related to a flow may be generated between the outer cavity 1124 of the first auxiliary valve and the side cavity 1125 of the first auxiliary valve. In other words, in an operating process that the hydraulic fluid in the rodless cavity 211 enters the rod cavity 212 through the first damping valve 11 under the action of the hydraulic cylinder 2 performing the compression motion, the first damping valve 11 may not cause the hydraulic cylinder 2 to generate a compression motion damping force related to a compression motion speed.

Referring to FIG. 3, FIG. 4, and FIG. 6, the flow path of the hydraulic fluid may be shown in broken lines m1 and m2, and an operating process of the second damping valve 12 may be as follows.

Since the connecting rod of the connecting rod and piston component 201 is disposed in the rod cavity 212 of the hydraulic cylinder 2, the piston operating cross-sectional area at the side of the rodless cavity 211 may be greater than that at the side of the rod cavity 212. When the hydraulic cylinder 2 performs the compression motion, a decreased volume of the rodless cavity 211 may be greater than an increased volume of the rod cavity 212. Therefore, when the rod cavity 212 is filled with the hydraulic fluid discharged from the rodless cavity 211, a part of the hydraulic fluid may be discharged. Referring to FIG. 3 and FIG. 6, the discharged hydraulic fluid may enter the side cavity 1225 of the second auxiliary valve through the first hydraulic fluid channel 131, and then enter the inner cavity 1226 of the second auxiliary valve and the front cavity 1214 of the second main valve through the hydraulic fluid hole 1223 of the second auxiliary valve. Alternatively, referring to FIG. 4, the discharged hydraulic fluid may enter the side cavity 1225 of the second auxiliary valve through the first hydraulic fluid channel 131, while entering the inner cavity 1226 of the second auxiliary valve and the front cavity 1214 of the second main valve through the hydraulic fluid hole 1223 of the second auxiliary valve.

Since the second main valve 121 of the second damping valve 12 is in a normal closed state at the initial time, the hydraulic fluid entering the front cavity 1214 of the second main valve cannot flow to the rear cavity 1215 of the second main valve. When the flow and the pressure of the hydraulic fluid entering from the first hydraulic fluid channel 131 gradually increase, the hydraulic fluid pressure in the front cavity 1214 of the second main valve may also be gradually greater than that in the rear cavity 1215 of the second main valve, thereby generating a pressure difference. The valve core 1211 of the second main valve may generate an opening force to allow the valve core 1211 of the second main valve to move towards a regulating rod 1213 of the second main valve under the action of the pressure difference, and the opening force may increase gradually as the pressure difference increases gradually.

When the opening force is greater than an elastic force of the elastic member 1212 of the second main valve acting on the valve core 1211 of the second main valve, the valve core 1211 of the second main valve may move towards the regulating rod 1213 of the second main valve and compress the elastic member 1212 of the second main valve under the opening force. In this case, the valve core 1211 of the second main valve and the front part of the second main valve cavity 1210 may be gradually separated to form a second main valve channel, the hydraulic fluid entering the front cavity 1214 of the second main valve may flow to the rear cavity 1215 of the second main valve through the second main valve channel, and then the hydraulic fluid may enter the liquid reservoir 3 through the second hydraulic fluid channel 132.

Since the hydraulic fluid flowing from the front cavity 1214 of the second main valve to the rear cavity 1215 of the second main valve generates a pressure drop when flowing through the second main valve channel, when the flow and the pressure of the hydraulic fluid flowing through the second main valve channel continuously increase, a hydraulic fluid pressure difference, in which the hydraulic fluid pressure in the front cavity 1214 of the second main valve is greater than that in the rear cavity 1215 of the second main valve, may also continuously increase, and the opening force may also continuously increase. Firstly, the valve core 1211 of the second main valve may continue to move towards the regulating rod 1213 of the second main valve and compress the elastic member 1112 of the second main valve under the continuously increasing opening force, i.e., a flow cross-sectional area of the second main valve channel may gradually increase, and the second main valve 121 may be in the overflow state. Then, when the valve core 1211 of the second main valve moves to abut against the regulating rod 1213 of the second main valve, and the opening force is less than or equal to a position retaining force of the regulating rod 1213 of the second main valve, the valve core 1211 of the second main valve may be maintained in a position regulated by the regulating rod 1213 of the second main valve under the action of the regulating rod 1213 of the second main valve, i.e., the flow cross-sectional area of the second main valve channel may be maintained in a value regulated by the regulating rod 1213 of the second main valve, and the second main valve 121 may be in the throttling state. Then, when the opening force is greater than the position retaining force of the regulating rod 1213 of the second main valve, the valve core 1211 of the second main valve may push the regulating rod 1213 of the second main valve to continue to move together along a direction of the regulating rod 1213 of the second main valve under the action of the opening force, i.e., the flow cross-sectional area of the second main valve channel may be increased gradually again, and the second main valve 121 may be in the overflow state again.

It should be noted that the regulating rod 1213 of the second main valve may move up and down along an axial direction by electronic control to adjust an axial position of the regulating rod 1213 of the second main valve, so as to adjust a circulation characteristic (a flow-pressure curve) of the second main valve 121. The regulating rod 1213 of the second main valve may be disposed in a self-locking structure or a non-self-locking structure. For the self-locking structure, specifically, when an external force is applied to the regulating rod 1213 of the second main valve along the axial direction, the regulating rod 1213 of the second main valve cannot move along an applied force direction, and can remain in an adjusted position, i.e., the regulating rod 1213 of the second main valve may not move as the opening force applied to the valve core 1211 of the second main valve increases. For the non-self-locking structure, specifically, the regulating rod 1213 of the second main valve may further be set the position retaining force of the regulating rod 1213 of the second main valve along the axial direction by electrical control or a preset force value. When the external force applied to the regulating rod 1213 of the second main valve along the axial direction is less than or equal to the preset position retaining force, the regulating rod 1213 of the second main valve may be maintained in an adjusted axial position. When the external force applied to the regulating rod 1213 of the second main valve along the axial direction is greater than the preset position retaining force, the regulating rod 1213 of the second main valve may move along the applied force direction, i.e., the regulating rod 1213 of the second main valve may move as the opening force applied to the valve core 1211 of the second main valve increases, and a circulation characteristic of the second main valve 121 may further be adjusted by changing the position retaining force.

It should be noted that, in an operating process that the hydraulic fluid in the rodless cavity 211 enters the liquid reservoir 3 through the second main valve 121 of the second damping valve 12 under the action of the hydraulic cylinder 2 performing the compression motion, the second main valve 121 can independently be in operation and can implement multi-stage multi-state control of the compression motion damping force according to speed change of the compression motion of the hydraulic cylinder 2. During implementation, when a speed of the compression motion of the hydraulic cylinder 2 changes, a flow of the hydraulic fluid flowing through the second main valve 121 may also change, and the pressure drop generated when the hydraulic fluid flows through the second main valve 121 may also change. In addition, the second main valve 121 may be in an operating state corresponding to the flow and the pressure, for example, when the flow and the pressure reach certain regulation interval values or preset interval values, the second main valve 121 may be in the overflow state or the throttle state at a stage corresponding to the second main valve 121, and the circulation characteristic of the second main valve 121 may approach a required ideal curve after multi-stage multi-state control. In each stage of the second main valve 121, the operating state of the second main valve 121 may form a backpressure corresponding to a hydraulic fluid circuit at a side of the rodless cavity 211, and a piston operating cross section at the side of the rodless cavity 211 may generate a corresponding force under the action of the backpressure, i.e., the hydraulic cylinder 2 may generate the corresponding compression motion damping force at each speed interval during the compression motion. In other words, when the hydraulic cylinder 2 performs the compression motion, the second main valve 121 of the second damping valve 12 can enable the hydraulic cylinder 2 to generate the compression motion damping force corresponding to a compression motion speed, and can adjust the circulation characteristic of the second main valve 121 in a preset and electronic control manner, so as to control a motion damping force characteristic (a motion speed-damping force curve) of the hydraulic cylinder 2 during the compression motion to approach the required ideal curve.

After the second main valve channel of the second damping valve 12 is formed, referring to FIG. 3 and FIG. 6, the hydraulic fluid entering the first hydraulic fluid channel 131 may successively pass through the side cavity 1225 of the second auxiliary valve, the hydraulic fluid hole 1223 of the second auxiliary valve, the inner cavity 1226 of the second auxiliary valve, and the front cavity 1214 of the second main valve, and may flow out through the second main valve channel. Alternatively, referring to FIG. 4, the hydraulic fluid entering from the first hydraulic fluid channel 131 may flow into the side cavity 1225 of the second auxiliary valve, while passing through the hydraulic fluid hole 1223 of the second auxiliary valve, the inner cavity 1226 of the second auxiliary valve, and the front cavity 1214 of the second main valve, and flowing out through the second main valve channel. Since the hydraulic fluid flowing from the first hydraulic fluid channel 131 to the inner cavity 1226 of the second auxiliary valve generates a pressure drop when flowing through the hydraulic fluid hole 1223 of the second auxiliary valve, the hydraulic fluid pressure in the side cavity 1225 of the second auxiliary valve may be greater than that in the inner cavity 1226 of the second auxiliary valve, thereby generating a pressure difference. The valve core 1221 of the second auxiliary valve may generate an opening force to allow the valve core 1221 of the second auxiliary valve to move towards the inner cavity 1226 of the second auxiliary valve under the action of the pressure difference. As the flow and the pressure of the hydraulic fluid that flows through the hydraulic fluid hole 1223 of the second auxiliary valve continuously increase, the pressure difference may also continuously increase, and the opening force may also continuously increase.

Since the second auxiliary valve 122 of the second damping valve 12 is in a normal closed state at the initial time, when the opening force is less than or equal to an elastic force that is applied to the valve core 1221 of the second auxiliary valve by the elastic member 1222 of the second auxiliary valve, the valve core 1221 of the second auxiliary valve may remain abutting against the lower part of the second auxiliary valve cavity 1220 under the elastic force of the elastic member 1222 of the second auxiliary valve, and the hydraulic fluid entering the side cavity 1225 of the second auxiliary valve cannot flow to the outer cavity 1224 of the second auxiliary valve, and the second auxiliary valve 122 may remain in a closed state.

It should be noted that when an abutment between the valve core 1221 of the second auxiliary valve and the lower part of the second auxiliary valve cavity 1220 is designed as a non-sealing structure, the hydraulic fluid entering the side cavity 1225 of the second auxiliary valve may flow to the outer cavity 1224 of the second auxiliary valve by a preset slit at the abutment after the valve core 1221 of the second auxiliary valve abuts against the lower part of the second auxiliary valve cavity 1220, and/or by a preset small hole or groove on the valve core 1221 of the second auxiliary valve or the lower part of the second auxiliary valve cavity 1220, and the second auxiliary valve 122 may be in a throttling state.

When the opening force is greater than the elastic force of the elastic member 1222 of the second auxiliary valve acting on the valve core 1221 of the second auxiliary valve, the valve core 1221 of the second auxiliary valve may move towards the inner cavity 1226 of the second auxiliary valve and compress the elastic member 1222 of the second auxiliary valve under the opening force. In this case, the valve core 1221 of the second auxiliary valve and the lower part of the second auxiliary valve cavity 1220 may be gradually separated to form a second auxiliary valve channel, the hydraulic fluid entering the side cavity 1225 of the second auxiliary valve may flow to the outer cavity 1224 of the second auxiliary valve through the second auxiliary valve channel, and finally the hydraulic fluid may enter the liquid reservoir 3 through the second hydraulic fluid channel 132.

It should be noted that, in an operating process that the hydraulic fluid in the rodless cavity 211 enters the liquid reservoir 3 through the second auxiliary valve 122 of the second damping valve 12 under the action of the hydraulic cylinder 2 performing the compression motion, since the flow of the hydraulic fluid flowing through the hydraulic fluid hole 1223 of the second auxiliary valve is controlled by the flow cross-sectional area of the second main valve channel, the pressure drop of the hydraulic fluid flowing through the hydraulic fluid hole 1223 of the second auxiliary valve may also be controlled, and a pressure difference, in which the hydraulic fluid pressure in the side cavity 1225 of the second auxiliary valve is greater than that in the inner cavity 1226 of the second auxiliary valve, may also be controlled. Therefore, the opening force of the valve core 1221 of the second auxiliary valve moving towards the inner cavity 1226 of the second auxiliary valve may also be controlled, so that the operating process of the second auxiliary valve 122 may also be controlled. In other words, a flow pressure characteristic of the hydraulic fluid flowing from the side cavity 1225 of the second auxiliary valve to the outer cavity 1224 of the second auxiliary valve through the second auxiliary valve channel may be controlled by the second main valve 121.

It should be noted that by increasing the flow cross-sectional area of the hydraulic fluid hole 1223 of the second auxiliary valve, the pressure drop generated when the hydraulic fluid flows through the hydraulic fluid hole 1223 of the second auxiliary valve may be decreased. Therefore, the pressure difference, in which the hydraulic fluid pressure in the side cavity 1225 of the second auxiliary valve is greater than that in the inner cavity 1226 of the second auxiliary valve, may also be decreased, and the opening force of the valve core 1221 of the second auxiliary valve moving towards the inner cavity 1226 of the second auxiliary valve may also be decreased. When the flow cross-sectional area of the hydraulic fluid hole 1223 of the second auxiliary valve increases to a certain extent, the opening force of the valve core 1221 of the second auxiliary valve moving towards the inner cavity 1226 of the second auxiliary valve may be always less than the elastic force that is applied to the valve core 1221 of the second auxiliary valve by the elastic member 1222 of the second auxiliary valve, i.e., the second auxiliary valve 122 may always remain the closed state and be uncontrolled by the second main valve 121.

In a process that the foregoing hydraulic cylinder 2 performs the compression motion, an increase of a hydraulic fluid charge level in the liquid reservoir 3 may decrease a space of the gas storage cavity 302. In this case, a pressure of the high-pressure gas in the gas storage cavity 302 may be increased, mechanical energy of the hydraulic cylinder 2 for performing the stretching motion may be converted into gas internal energy, the hydraulic fluid pressure in the hydraulic fluid circuit in communication with the liquid reservoir 3 may also be increased, and a stretching force for the hydraulic cylinder 2 performing the stretching motion, which is generated by the hydraulic fluid pressure acting on the piston operating cross section of the connecting rod and piston component 201, may also be increased. When the stretching force of the hydraulic cylinder 2 increases to be balanced with an external compression force acting on the hydraulic cylinder 2, the hydraulic cylinder 2 may stop the compression motion, and then enter a next operating period.

In conclusion, in the hydro-pneumatic spring device A capable of regulating a damping force in the present invention, the valve body 13 is configured to assemble the first damping valve 11 and the second damping valve 12 together, so that when the hydraulic cylinder 2 is compressed or stretched, both the first damping valve 11 and the second damping valve 12 can participate in hydraulic fluid circulation, and the hydraulic cylinder 2 generates a compression motion damping force and a stretching motion damping force, thereby inhibiting vibration generated in a driving process of the vehicle, ensuring vehicle running smoothly, and improving vehicle operating stability.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

The above-described embodiments are only several implementations of the present invention, and the descriptions are relatively specific and detailed, but they should not be construed as limiting the scope of the present invention. It should be understood by those of ordinary skill in the art that various modifications and improvements can be made without departing from the concept of the present invention, and all fall within the protection scope of the present invention. Therefore, the patent protection of the present invention shall be defined by the appended claims.

## Claims

1. A hydro-pneumatic spring device, capable of regulating a damping force, **characterized by** comprising a liquid reservoir, a hydraulic cylinder, and a damper, wherein the hydraulic cylinder comprises a cylinder barrel component and a connecting rod and piston component, the connecting rod and piston component is slidably mounted in the cylinder barrel component, and the cylinder barrel component is divided into a rod cavity and a rodless cavity via the connecting rod and piston component; and the damper comprises a first damping valve, a second damping valve, and a valve body, both the first damping valve and the second damping valve are mounted on the valve body, and the rodless cavity is capable of being in communication with the reservoir and the rod cavity via the first damping valve and the second damping valve, respectively, or, the rodless cavity is capable of being in communication with the rod cavity and the reservoir via the first damping valve and the second damping valve, respectively.

2. The hydro-pneumatic spring device of claim 1, wherein the valve body is provided with a first hydraulic fluid channel, a second hydraulic fluid channel, and a third hydraulic fluid channel, the rodless cavity is capable of being in communication with the first damping valve and the second damping valve via the first hydraulic fluid channel, the rod cavity is capable of being in communication with the second damping valve via the second hydraulic fluid channel, and the liquid reservoir is capable of being in communication with the first damping valve via the third hydraulic fluid channel; or the rod cavity is capable of being in communication with the first damping valve via the third oil channel, and the liquid reservoir is capable of being in communication with the second damping valve via the second hydraulic fluid channel.

3. The hydro-pneumatic spring device of claim 2, wherein the first damping valve comprises a first main valve and a first auxiliary valve which are in communication with each other, and the first main valve is configured to control a flow of hydraulic fluid in the first auxiliary valve; and
the second damping valve comprises a second main valve and a second auxiliary valve which are in communication with each other, and the second main valve is configured to control a flow of hydraulic fluid in the second auxiliary valve.

4. The hydro-pneumatic spring device of claim 3, wherein the valve body is provided with a first main valve cavity and a first auxiliary valve cavity, the first main valve and the first auxiliary valve are disposed in the first main valve cavity and the first auxiliary valve cavity, respectively, the first main valve comprises a valve core of the first main valve and an elastic member of the first main valve, the valve core of the first main valve is slidably disposed in the first main valve cavity, the first main valve cavity is divided into a front cavity of the first main valve and a rear cavity of the first main valve by the valve core of the first main valve, two ends of the elastic member of the first main valve abut against the valve core of the first main valve and an inner wall of the first main valve cavity, respectively, the first auxiliary valve comprises a valve core of the first auxiliary valve and an elastic member of the first auxiliary valve, the valve core of the first auxiliary valve is slidably disposed in the first auxiliary valve cavity, the first auxiliary valve cavity is divided into an outer cavity of the first auxiliary valve, an inner cavity of the first auxiliary valve, and a side cavity of the first auxiliary valve, and two ends of the elastic member of the first auxiliary valve abut against an inner wall of the inner cavity of the first auxiliary valve and the valve core of the first auxiliary valve, respectively; and the valve body is provided with a second main valve cavity and a second auxiliary valve cavity, the second main valve and the second auxiliary valve are disposed in the second main valve cavity and the second auxiliary valve cavity, respectively, the second main valve comprises a valve core of the second main valve and an elastic member of the second main valve, the valve core of the second main valve is slidably disposed in the second main valve cavity, the second main valve cavity is divided into a front cavity of the second main valve and a rear cavity of the second main valve by the valve core of the second main valve, respectively, two ends of the elastic member of the second main valve abut against the valve core of the second main valve and an inner wall of the second main valve cavity, respectively, the second auxiliary valve comprises a valve core of the second auxiliary valve and an elastic member of the second auxiliary valve, the valve core of the second auxiliary valve is slidably disposed in the second auxiliary valve cavity, the second auxiliary valve cavity is divided into an outer cavity of the second auxiliary valve, an inner cavity of the second auxiliary valve, and a side cavity of the second auxiliary valve by the valve core of the second auxiliary valve, and two ends of the elastic member of the second auxiliary valve abut against an inner wall of the inner cavity of the second auxiliary valve and the valve core of the second auxiliary valve, respectively.

5. The hydro-pneumatic spring device of claim 4, wherein the first hydraulic fluid channel is in communication with the outer cavity of the first auxiliary valve and the side cavity of the second auxiliary valve, respectively, the second hydraulic fluid channel is in communication with the outer cavity of the second auxiliary valve, and the third hydraulic fluid channel is in communication with the side cavity of the first auxiliary valve.

6. The hydro-pneumatic spring device of claim 5, wherein the outer cavity of the first auxiliary valve is in communication with the inner cavity of the first auxiliary valve via a hydraulic fluid hole of the first auxiliary valve, or, the side cavity of the first auxiliary valve is in communication with the inner cavity of the first auxiliary valve via the hydraulic fluid hole of the first auxiliary valve; and the outer cavity of the second auxiliary valve is in communication with the inner cavity of the second auxiliary valve via a hydraulic fluid hole of the second auxiliary valve, or, the side cavity of the second auxiliary valve is in communication with the inner cavity of the second auxiliary valve via the hydraulic fluid hole of the second auxiliary valve.

7. The hydro-pneumatic spring device of claim 5, wherein when the hydraulic fluid hole of the first auxiliary valve is configured to be in communication with the outer cavity of the first auxiliary valve and the inner cavity of the first auxiliary valve and the hydraulic fluid hole of the second auxiliary valve is configured to be in communication with the outer cavity of the second auxiliary valve and the inner cavity of the second auxiliary valve, the first hydraulic fluid channel is further in communication with the rear cavity of the second main valve, the second hydraulic fluid channel is in communication with the rod cavity, and the third hydraulic fluid channel is further in communication with the rear cavity of the first main valve and the liquid reservoir; and when the hydraulic fluid hole of the first auxiliary valve is configured to be in communication with the side cavity of the first auxiliary valve and the inner cavity of the first auxiliary valve and the hydraulic fluid hole of the second auxiliary valve is configured to be in communication with the side cavity of the second auxiliary valve and the inner cavity of the second auxiliary valve, the first hydraulic fluid channel is further in communication with the rear cavity of the first main valve, the second hydraulic fluid channel is further in communication with the rear cavity of the second main valve and the liquid reservoir, and the third hydraulic fluid channel is in communication with the rod cavity.

8. The hydro-pneumatic spring device of claim 6, wherein the hydraulic fluid hole of the first auxiliary valve is disposed on the valve core of the first auxiliary valve or the valve body, and the hydraulic fluid hole of the second auxiliary valve is disposed on the valve core of the second auxiliary valve or the valve body.

9. The hydro-pneumatic spring device of claim 7, wherein the first main valve further comprises a regulating rod of the first main valve, the second main valve further comprises a regulating rod of the second main valve, and both the regulating rod of the first main valve and the regulating rod of the second main valve are movably mounted on the valve body and abut against the first main valve and the second main valve, respectively.

10. The hydro-pneumatic spring device of claim 1 or claim 9, wherein the liquid reservoir is provided with a gas-liquid spacing device, and the liquid reservoir is capable of being divided into a liquid storage cavity and a gas storage cavity by the gas-liquid spacing device.

11. The hydro-pneumatic spring device of claim 10, wherein the liquid reservoir is provided with either or both of a liquid charging and discharging interface and a gas charging and discharging interface, the liquid charging and discharging interface is configured to allow hydraulic fluid in the liquid reservoir to be replenished and discharged; and the gas charging and discharging interface is configured to allow gas in the liquid reservoir to be replenished and discharged, in order to adjust an initial position of the connecting rod and piston component on the cylinder barrel component.
